# EUROPEAN PATENT APPLICATION

(11) **EP 4 481 998 A1**
(43) Date of publication of application: **25.12.2024**
(21) Application number: 22932760.6
(22) Date of filing: 25.03.2022
(51) Int. Cl.: H02K 9/19, B63H 21/17

(54) **ELECTRIC MOTOR, MARINE PROPELLER AND SHIP**

(71) Applicant: Guangdong ePropulsion Technology Limited, Dongguan, 523808 Guangdong Province (CN)
(72) Inventor: DAI, Xinsheng, Dongguan, Guangdong 523808 (CN); TAN, Hao, Dongguan, Guangdong 523808 (CN); LI, Jun, Dongguan, Guangdong 523808 (CN); XU, Dong, Dongguan, Guangdong 523808 (CN); ZENG, Yinhui, Dongguan, Guangdong 523808 (CN); XIE, Jiarong, Dongguan, Guangdong 523808 (CN)
(74) Representative: Michalski Hüttermann & Partner Patentanwälte mbB
(86) International application number: PCT/CN2022/083194
(87) International publication number: WO 2023/178699

(57) **Abstract**

This application provides a motor, a watercraft propeller, and a watercraft. The motor includes: a housing with a cavity filled with insulating liquid; a stator fixed inside the cavity, with an inner rotating cavity on its inner side; and a agitation structure, rotating inside the inner rotating cavity, at least partially immersed in the insulating liquid, and configured to agitate the insulating liquid in a centrifugal or rotational form to contact and cool the stator. The agitation structure agitate the insulating liquid to the inner peripheral surface of the stator, allowing the stator to obtain the insulating liquid from the inner peripheral surface, ensuring uniform contact and heat exchange between the stator and the insulating liquid.

## Description

### CROSS-REFERENCE TO RELATED APPLICATION

This application is a continuation of International Application No. PCT/CN2022/083194, filed on March 25, 2022. The entire content of the above-referenced applications is expressly incorporated herein by reference.

### TECHNICAL FIELD

The present application relates to the field of electromechanical equipment, in particular, to a motor, watercraft propeller and watercraft.

### TECHNICAL BACKGROUND

Currently, motors are cooled by lowering the temperature of the housing. The housing absorbs the heat of the stator and rotor through air, thereby cooling the stator and rotor. However, due to the low thermal conductivity of air between the housing and the stator and rotor, the housing cannot effectively absorb the heat of the stator and rotor, making it difficult to lower the temperature of the stator and rotor, affecting the efficiency of the stator and rotor, and reducing the overall efficiency of the motor.

### SUMMARY

The present application provides a motor, a watercraft propeller, and a watercraft.

Embodiments of the present application provide a motor, wherein the motor includes:
a housing, provided with a cavity filled with insulating liquid;
a stator, fixed inside the cavity and provided with an inner rotating cavity; and
a agitation structure, rotatably provided in the inner rotating cavity, at least partially immersed in the insulating liquid, and configured to agitate the insulating liquid in a centrifugal or rotational form to contact and cool the stator.

Embodiments of the present application also provide a watercraft propeller, wherein the watercraft propeller includes the above-mentioned motor.

Embodiments of the present application also provide a watercraft propeller, wherein the watercraft propeller includes a motor and a propeller, the motor includes:
a housing, provided with a cavity containing insulating liquid;
a stator, fixed in the cavity and provided with an inner rotating cavity;
a rotor, rotatably disposed in the rotor cavity, electromagnetically coupled with the stator, and configured to drive the insulating liquid to contact an end of the stator in a form of centrifugal motion or rotational motion to cool the end of the stator; and
a shaft, with one end disposed in the cavity and fixed to the rotor, and the other end configured to output rotational torque;
and wherein the propeller is connected to the shaft to receive rotational torque from the shaft.

Embodiments of the present application also provide a watercraft, wherein the watercraft includes the above-mentioned watercraft propeller.

In embodiments of the present application, an electric motor is provided with a agitation structure located on an inner side of the stator. This agitation structure is configured to agitate the insulating liquid, causing it to flow along an inner peripheral surface of the stator, so that the stator obtains the insulating liquid from the inner peripheral surface, allowing the stator to uniformly contact and exchange heat with the insulating liquid. Due to the contact between the insulating liquid and the housing, the insulating liquid conducts the heat of the stator to the housing, and the housing then transfers the heat to the outside of the motor, effectively cooling the stator with the insulating liquid.

### BRIEF DESCRIPTION OF DRAWINGS

In order to clearly explain the technical solution in the embodiments or background technology of the present application, the following will explain the illustrations needed in the embodiments or background technology of the present application.
Fig. 1 is a schematic cross-sectional view of a motor, according to some embodiments of the present application;
Fig. 2 is a schematic diagram of a motor, watercraft propeller, and watercraft, according to some embodiments of the present application;
Fig. 3 is a schematic cross-sectional view of the motor in Fig. 1, according to some embodiments of the present application;
Fig. 4 is a schematic cross-sectional view of the motor in Fig. 1, according to some embodiments of the present application;
Fig. 5 is a schematic cross-sectional view of the motor in Fig. 1, according to some embodiments of the present application;
Fig. 6 is a schematic cross-sectional view of a motor, according to some embodiments of the present application;
Fig. 7 is a schematic cross-sectional view of the motor in Fig. 6, according to some embodiments of the present application;
Fig. 8 is a schematic cross-sectional view of the motor in Fig. 6, according to some embodiments of the present application;
Fig. 9 is a schematic cross-sectional view of the motor, according to some embodiments of the present application;
Fig. 10 is a schematic cross-sectional view of the motor, according to some embodiments of the present application;
Fig. 11 is a schematic cross-sectional view of the motor in Fig. 10, according to some embodiments of the present application;
Fig. 12 is a schematic cross-sectional view of the motor, according to some embodiments of the present application;
Fig. 13 is a schematic cross-sectional view of the motor in Fig. 12, according to some embodiments of the present application;
Fig. 14 is a schematic cross-sectional view of the motor in Fig. 12, according to some embodiments of the present application;
Fig. 15 is a schematic cross-sectional view of a motor, according to some embodiments of the present application;
Fig. 16 is a schematic cross-section view of the motor in Fig. 15, according to some embodiments of the present application;
Fig. 17 is a schematic cross-section view of the motor in Fig. 15, according to some embodiments of the present application;
Fig. 18 is a schematic cross-section view of the motor in Fig. 15, according to some embodiments of the present application;
Fig. 19 is a schematic diagram of the cross-section of a motor, according to some embodiments of the present application;
Fig. 20 is a partial enlarged schematic diagram of part x of the motor in Fig. 19, according to some embodiments of the present application;
Fig. 21 is a schematic cross-section view of a motor, according to some embodiments of the present application of the present application;
Fig. 22 is a schematic cross-section view of the motor in Fig. 21, according to some embodiments of the present application;
Fig. 23 is a schematic cross-section view of the motor in Fig. 21, according to some embodiments of the present application;
Fig. 24 is a schematic cross-section view of a motor, according to some embodiments of the present application;
Fig. 25 is a schematic cross-section view of the motor in Fig. 24, according to some embodiments of the present application;
Fig. 26 is a schematic cross-section view of a motor, according to some embodiments of the present application;
Fig. 27 is a schematic cross-section view of a first rotating ring of the motor in Fig. 26, according to some embodiments of the present application;
Fig. 28 is a schematic cross-section view of the first rotating ring of the motor in Fig. 26, according to some embodiments of the present application;
Fig. 29 is a schematic cross-section view of the first rotating ring of the motor in Fig. 26, according to some embodiments of the present application;
Fig. 30 is a schematic cross-section view of a motor, according to some embodiments of the present application;
Fig. 31 is a schematic cross-section view of a second rotating ring of the motor in Fig. 30, according to some embodiments of the present application;
Fig. 32 is a schematic cross-section view of the second rotating ring of the motor in Fig. 30, according to some embodiments of the present application;
Fig. 33 is a schematic diagram of the second rotating ring of the motor in Fig. 31, according to some embodiments of the present application;
Fig. 34 is a perspective view of the second rotating ring of the motor in some embodiments in Fig. 31, according to some embodiments of the present application;
Fig. 35 is a perspective view of the second rotating ring of the motor in Fig. 34, according to some embodiments of the present application;
Fig. 36 is a schematic cross-section view of the second rotating ring of the motor in Fig. 30, according to some embodiments of the present application;
Fig. 37 is a schematic cross-section view of a motor, according to some embodiments of the present application;
Fig. 38 is a schematic cross-section view of a third rotating ring of the motor in Fig. 37, according to some embodiments of the present application;
Fig. 39 is a schematic cross-section view of the third rotating ring of the motor in Fig. 38, according to some embodiments of the present application;
Fig. 40 is a schematic cross-section view of the third rotating ring of the motor in Fig. 37, according to some embodiments of the present application;
Fig. 41 is a schematic cross-section view of a motor, according to some embodiments of the present application;
Fig. 42 is a schematic cross-section view of a motor, according to some embodiments of the present application;
Fig. 43 is a schematic cross-section view of a motor, according to some embodiments of the present application;
Fig. 44 is a schematic cross-section view of the motor in Fig. 43, according to some embodiments of the present application;
Fig. 45 is a schematic cross-section view of a motor, according to some embodiments of the present application;
Fig. 46 is a schematic cross-section view of a motor, according to some embodiments of the present application;
Fig. 47 is schematic cross-section view of a motor, according to some embodiments of the present application;
Fig. 48 is an exploded view of a watercraft propeller, according to some embodiments of the present application;
Fig. 49 is a schematic diagram of a watercraft propeller, according to some embodiments of the present application;
Fig. 50 is another schematic diagram of the watercraft propeller, according to some embodiments of present embodiment;
Fig. 51 is another schematic diagram of the watercraft propeller, according to some embodiments of the present embodiment;
Fig. 52 is a schematic diagram of a watercraft propeller, according to some embodiments of the present application;
Fig. 53 is another schematic diagram of the motor of the watercraft propeller, according to some embodiments of the present embodiment;
Fig. 54 is a schematic diagram of the motor of the watercraft propeller in Fig. 53, according to some embodiments of the present application;
Fig. 55 is a schematic diagram of a watercraft propeller, according to some embodiments of the present application;
Fig. 56 is a schematic diagram of a watercraft propeller, according to some embodiments of the present application;
Fig. 57 is a schematic diagram of a watercraft propeller, according to some embodiments of the present application;
Fig. 58 is a schematic diagram of a watercraft, according to some embodiments of the present application;
Fig. 59 is a schematic diagram of a watercraft, according to some embodiments of the present application; and
Fig. 60 is a schematic diagram of a watercraft, according to some embodiments of the present application.

Motor 1000, housing 100, cavity 110, insulating liquid 120, inner surface 130, outer surface 131, first end cover 141, side shell 142, second end cover 143, first open end 1421, second open end 1422, end cover 149, open end 1429, closed end 1428, shaft hole 150, first bearing bracket 1411, first sealing flange 1412, second bearing bracket 1431, stator 200, inner rotating cavity 210, winding coil 220, iron core 230, column 240, stator magnet 250, first opening 211, second opening 212, agitation structure 300, watercraft propeller 2000, watercraft 3000, rotor 400, rotor winding coil 410, magnetic components 420, rotor bracket 430, slot 431, shaft 500, first end 510, second end 520, first bearing 530, second bearing 540, elastic washer 550, propeller 2100, load shaft 600, first shaft body 310, seal 700, through-hole 701, first sealing lip edge 710, second sealing lip edge 720, first sealing ring 730, second sealing ring 740, sealing gasket 750, first bottom ring 731, first side ring 732, second bottom ring 741, second side ring 742, first rotating ring 330, first outer peripheral surface 331, first mating hole 332, dimples 3311, convexities 3312, second rotating ring 340, protrusion 341, second mating hole 342, second outer peripheral surface 343, top surface of protrusion 3411, first side surface of protrusion 3412, second side surface of protrusion 3413, first protrusion 344, second protrusion 345, first end surface of protrusion 3414, second end surface of protrusion 3415, third rotating ring 350, inner cavity 351, transverse hole 352, third mating hole 353, third outer peripheral surface 354, first inner side surface 3511, second inner side surface 3512, arc inner surface 3513, arc bottom surface 3514, first top inner surface 3515, second top inner surface 3516, first edge 3311, second edge 3312, centerline 3313, balance plate 360, first outer side surface 361, second outer side surface 362, outer end surface 363, first balance plate 364, second balance plate 365, weight reduction hole 440, drainage hole 370, cooling channel 190, first agitation structure 301, second agitation structure 302, first fixed sleeve 500, second fixed sleeve 600, seal 700, first connecting plate 1419, first sealing groove 1418, first rubber ring 1417, second rubber ring 1427, support tube 800, wire cavity 810, stabilizing plate 900, driver 2200, radiator 2300, rotating ring 390, hull 3100, power sources 3200, steering mechanism 3300, control module 3310, steering bracket 3320, steering shaft 3330, trimming mechanism 3400, trim control module 3410, trim shaft 3420, interactive system 3500, first blocking member 1100, first isolation plate 1101, cylindrical surface 1102, first blocking surface 1103, second isolation plate 1104, second blocking surface 1105, second blocking member 1200, third isolation plate 1201, third blocking member 1300, fourth isolation plate 1202.

### DETAILED DESCRIPTION

Unless otherwise defined, all technical and scientific terms used in this article have the same meaning as understood by those skilled in the art to which the embodiments of the present application belong; the terms used in the description of the embodiments of the present application in this article are only intended to describe the specific purposes of the embodiments, not to limit the embodiments of the present application; the terms "including" and "having" in the description of the embodiments and claims of the present application and the above-mentioned drawings are intended to cover non-exclusive inclusion. The terms "first," "second," etc. in the specification, claims or the above drawings are used to distinguish different objects, not to describe a specific order.

As used herein, the term "embodiment" means that specific features, structures, or characteristics described in conjunction with embodiments can be included in at least some embodiments of the present application. The appearance of this phrase at various locations in the specification does not necessarily refer to the same embodiment, nor is it an independent or alternative embodiment that is mutually exclusive with other embodiments. Those skilled in the art explicitly and implicitly understand that the embodiments described herein can be combined with other embodiments.

In order to help others in this technical field better understand the embodiments of the present application, the following will combine the drawings in the embodiments of the present application to provide a clear description of the technical solution in the embodiments of the present application.

It can be understood that the motor converts electrical energy into magnetic field energy through the electromagnetic effect, and then converts the magnetic field energy into mechanical energy. Due to energy conversion efficiency, some energy will be converted into heat energy. Therefore, the heat energy needs to be dissipated in a timely manner; otherwise, the heat energy will accumulate inside the motor, causing the internal temperature of the motor to rise. As the structural components inside the motor inevitably reduce efficiency in a high-temperature environment, this leads to a further decrease in energy conversion efficiency, which in turn increases heat energy, causing a vicious cycle in motor operation and ultimately resulting in motor failure. Traditional motors generally use water for heat dissipation; however, due to the susceptibility of internal motor components to corrosion, water cannot directly enter the motor's internal cavity for cooling. Water cooling mainly involves a water pump transporting external circulating water to the outer shell of the motor or a closed circulating channel inside the motor, indirectly cooling the fixed components inside the motor. Therefore, the water cooling of the motor is an indirect cooling method, and its cooling effect is not ideal.

Lubricating oil is usually set inside the motor to lubricate the internal components of the motor, reduce the internal resistance of the motor, and improve the efficiency of the motor. The lubricating oil inside the motor also serves to conduct heat to the internal structural components of the motor, allowing the heat from the internal structural components to be conducted to the motor's outer housing. The motor's outer housing then dissipates the heat, achieving the cooling effect of the motor. Since the lubricating oil inside the motor mainly acts on the structural components that move in coordination inside the motor, lubricating oil has less contact with structural components that do not move in coordination inside the motor. As a result, the cooling efficiency of structural components that do not move in coordination inside the motor is lower, and therefore, the cooling effect using the lubricating oil inside the motor is also not ideal.

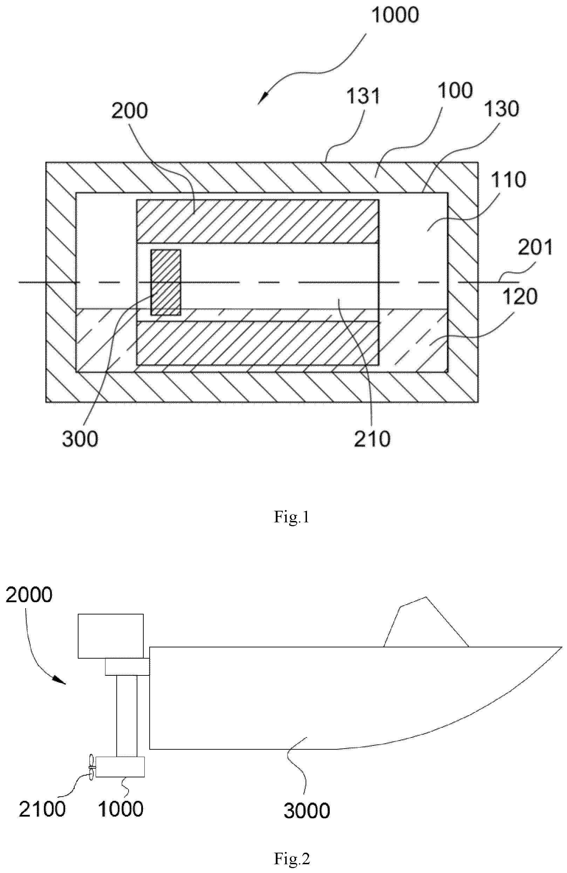

Please refer to Fig. 1. To solve the problem of the increased temperature inside the motor and improve the efficiency of motor operation, this exemplary embodiment provides a motor 1000, which includes:
a housing 100, the housing 100 being provided with a cavity 110, and the cavity 110 being filled with an insulating liquid 120;
a stator 200, fixed inside the cavity 110, the stator 200 being provided with an inner rotating cavity 210;
an agitation structure 300, rotatably provided in the inner rotating cavity 210, and at least partially immersed in the insulating liquid 120, the agitation structure 300 being used to agitate the insulating liquid 120 in a centrifugal or rotational form to contact the stator 200 to cool the stator 200.

Please refer to both Fig. 1 and Fig. 2. The present embodiment provides a motor 1000, which is applied to a watercraft propeller 2000, enabling the watercraft propeller 2000 to propel the movement of a watercraft 3000.

The watercraft propeller 2000 can be installed either inside or outside the watercraft 3000. In the present embodiment, the watercraft propeller 2000 aims to rotate the propeller 2100 by obtaining mechanical energy from the motor 1000. The propeller 2100 propels the watercraft 3000 to move when the propeller 2100 is underwater. There is not specified limitation on where the watercraft propeller 2000 is installed on the watercraft 3000.

The watercraft 3000 can be propelled by the watercraft propeller 2000, which has the same meaning as a ship as used herein, and can be any type of watercraft, such as yachts, passenger ships, boats, rafts, kayaks, etc., without any specific limitations.

In the implementation example of this application, the motor 1000 agitate the insulating liquid 120 along the inner circumference of the stator 200 by means of the agitation structure 300 located inside the stator 200. When the agitation structure 300 rotates, it agitate the insulating liquid 120 towards the inner circumferential surface of the stator 200, so that the entire inner circumferential surface of the stator 200 receives the insulating liquid 120, allowing the stator 200 to be in uniform contact with the insulating liquid 120 and undergo heat exchange.

When the agitation structure 300 is not rotating, at least a portion of the stator 200 is still immersed in the insulating liquid 120, allowing heat exchange between the stator 200 and the insulating liquid 120.

Since the insulating liquid 120 is in contact with the housing 100, the insulating liquid 120 conducts the heat from the stator 200 to the housing 100, and the housing 100 then dissipates the heat to the exterior of the motor 1000, so that the insulating liquid 120 effectively cools the stator 200.

Obviously, by using the agitation structure 300 to distribute the insulating liquid 120 onto the stator 200, it is possible to cool the non-moving components inside the motor 1000. This is different from the current cooling schemes using lubricating oil, as the lubricating oil is typically located between the rotating shaft and the bearing, and cannot effectively cool the stator.

The motor 1000 of the present application uses the agitation structure 300 to circulate the insulating liquid 120 and cool the stator 200, improving the cooling efficiency and increasing the overall efficiency of the motor 1000.

In this embodiment, the housing 100 has an inner surface 130. The cavity 110 is formed in the space enclosed by the inner surface 130. The housing 100 also has an outer surface 131 opposite to the inner surface 130. The outer surface 131 can be in contact with air, water, or cooling oil. That is, the motor 1000 can be in an air environment, underwater environment, or oil-cooling environment. The outer surface 131 of the motor 1000 can be in contact with any medium with thermal conductivity, and the embodiments of the present application do not limit the thermal medium contacted with the outer surface 131. The housing 100 is in contact with an external thermal medium through the outer surface 131, allowing the thermal medium to take away the heat of the housing 100, thereby cooling the motor 1000. Of course, it can be understood that a thermal conduction medium can also be set between the inner surface 130 and the outer surface 131. By allowing the thermal conduction medium located between the outer surface 131 and the inner surface 130 to contact the motor housing 100, the heat dissipation from the motor housing 100 can be achieved. In the implementation example of the present application, any thermal conduction medium in contact with the housing 100 is not limited to the forms mentioned above. Any medium intended for heat exchange with the housing 100 to dissipate the heat absorbed by the housing 100 from the insulating liquid 120 can be used as an embodiment of the present application.

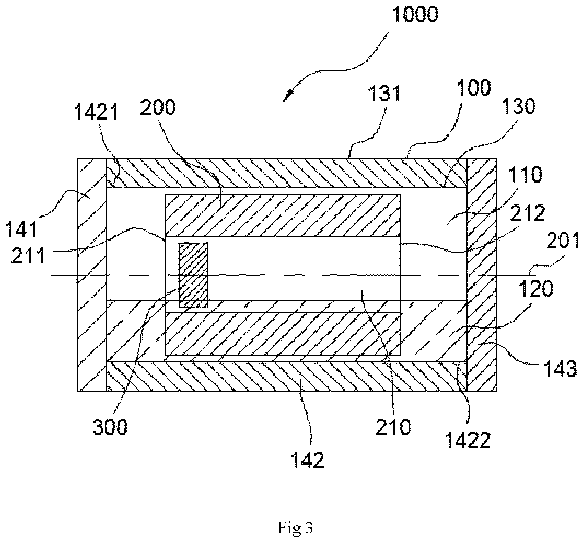

In particular, as shown in Fig. 3, the motor housing 100 includes a first end cover 141, a side shell 142, and a second end cover 143. The side shell 142 has a first opening end 1421 and a second opening end 1422 opposite the first opening end 1421. The first end cover 141 and the second end cover 143 are respectively covered on the first opening end 1421 and the second opening end 1422, so that the cavity 110 is a closed cavity formed between the first end cover 141, the side shell 142, and the second end cover 143. In some embodiments, the first end cover 141 and the second end cover 143 are sealed and covered on the first opening end 1421 and the second opening end 1422, so that the cavity 110 is a sealed cavity.

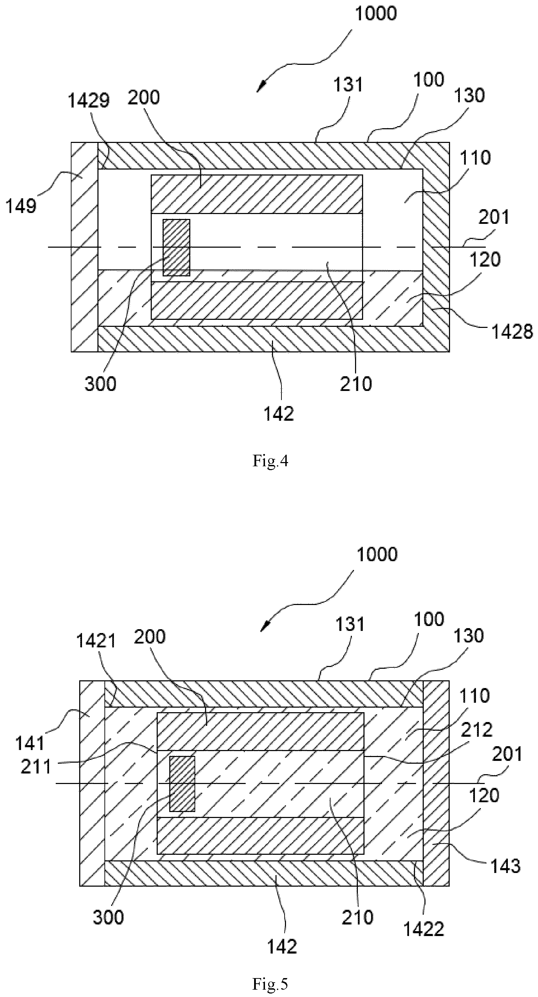

In other embodiments, as shown in Fig. 4, the housing 100 may have an end cover 149, the side shell 142 has an open end 1429 that seals and cooperates with the end cover 149, and a closed end 1428 opposite the open end 1429, the cavity 110 is formed between the end cover 149 and the side shell 142, thereby the cavity 110 is a sealed cavity.

It can be understood that by setting cavity 110 as a sealed cavity, the insulation liquid 120 will not be lost in cavity 110, thereby maintaining the thermal conductivity efficiency of the insulation liquid 120 unchanged and ensuring the cooling efficiency of the motor 1000.

In this embodiment, the insulation liquid 120 is a non-conductive fluid, which will not cause a short circuit to the internal circuits of motor 1000. The insulation liquid 120 is flowable. In the state where the insulation liquid 120 is not agitated by agitation structure 300, it will also come into contact with a part of stator 200. In the state where the insulation liquid 120 is agitated by the agitation structure 300, due to the flowable nature of the insulation liquid 120, after coming into contact with the stator 200, it can flow to an inner surface 130, thereby taking away the heat of the stator 200 and achieving cooling. The insulating liquid 120 also has a lubricating effect, which lubricates and reduces the damping force on the internal moving parts of the motor housing 100, improving the efficiency of the motor 1000. In particular, the insulating liquid 120 can be any liquid with thermal conductivity and insulation properties, such as engine oil, vegetable oil, mineral oil, silicone oil, etc. In the embodiments provided in this application, the composition of the insulating liquid 120 is not limited to the forms specified above. Any liquid with thermal conductivity, insulation, and flowability can be used as an embodiment of the insulating liquid 120 in the embodiments of this application.

In this embodiment, please refer to Fig. 3 for details. The stator 200 can be loaded into the side shell 142 from the first opening end 1421 or the second opening end 1422. The stator 200 can be directly or indirectly fixed to the inner surface of the side shell 142. The stator 200 has an annular cylindrical structure, with a first opening 211 facing the same direction as the first opening end 1421 and a second opening 212 facing the same direction as the second opening end 1422. The first opening 211 and the second opening 212 are used to allow the rotation shaft of the motor 1000 to pass through, facilitating the output of power from the rotation shaft of the motor 1000. The first opening 211 and the second opening 212 are also used to allow the insulating liquid 120 to enter the inner rotating cavity 210, facilitating the agitation structure 300 to agitate the insulating liquid 120. In the embodiments of the present application, the stator 200 can be a permanent magnet, an electromagnet, or a magnetizer. In the embodiments of the present application, the specific presentation form of the stator 200 is not limited to the forms described above, and any stator that can provide a driving force for the motor 1000 can be used as an embodiment of the present application.

In this embodiment, the agitation structure 300 can rotate within the inner rotating cavity 210. The rotation axis of the agitation structure 300 is coaxially set with the axis of the stator 200. The rotation axis of the agitation structure 300 allows the agitation structure 300 to rotate around it. The axis 201 of the stator 200 is a line equidistant from the inner peripheral surface of the stator 200 at all points. The agitation structure 300 has an outer end far from its rotation axis. There is a gap between the outer end and the inner peripheral surface of the stator 200, which can be the assembly gap between the agitation structure 300 and the stator 200. By setting a gap between the outer end and the inner peripheral surface of the stator 200, the agitation structure 300 can rotate inside the cavity 210. When the agitation structure 300 rotates, the outer end can come into contact with the insulating liquid 120, ensuring that the agitation structure 300 can agitate the insulating liquid 120. It can be understood that the agitation structure 300 can be a regular cylindrical structure, with equidistant distances from its axis on the peripheral side of the agitation structure 300; when the agitation structure 300 is stationary, the outer end always remains at least partially immersed in the insulating liquid 120. The agitation structure 300 can also be an irregular shape, such as a triangular prism, a square prism, a pentagon main body, etc. When the agitation structure 300 is stationary relative to the housing 100, the outer end can be immersed in the insulating liquid 120, or it can be offset from the insulating liquid 120. In the embodiments of the present application, the structural form of the agitation structure 300 is not limited to the above-mentioned ways. Any agitation structure 300 intended to rotate and agitate the insulating liquid 120 within the inner cavity 210 can be used as an embodiment of the present application.

It can be understood that when the insulating liquid 120 is not filled in the cavity 110, the insulating liquid 120 accumulates in the cavity 110 due to gravity when the agitation structure 300 does not agitate the insulating liquid 120. The motor 1000 is in a horizontal position as shown in Fig. 3 (i.e., the axis 201 of the stator 200 is horizontally set), and the insulating liquid 120 at least immerses a part of the inner peripheral surface of the stator 200, so that the insulating liquid 120 can enter the inner rotating cavity 210, and the agitation structure 300 in the inner rotating cavity 210 can also come into contact with the insulating liquid 120. In other words, when the motor 1000 is in the state shown in Fig. 3, the distance from the upper surface of the insulating liquid 120 to the axis of the stator 200 is less than the distance from the inner peripheral surface of the stator 200 to the axis of the stator 200, and the distance from the upper surface of the insulating liquid 120 to the axis of the stator 200 is less than the distance from the outer end of the agitation structure 300 to the axis of the agitation structure 300, so that the outer end of the agitation structure 300 can definitely come into contact with the insulating liquid 120.

In the embodiments provided in this application, the insulating liquid 120 can be fully filled in the cavity 110, or be partially filled in the cavity 110. The injection amount of the insulating liquid 120 in the cavity 110 is set according to the distance from the outer end to the axis of the agitation structure 300, ensuring that the agitation structure 300 can agitate the insulating liquid 120 accurately.

As shown in Figs. 3 and 4, when the insulating liquid 120 is not fully filled in the cavity 110, the agitation structure 300 can rotate around its axis to agitate part of the insulating liquid 120 to move centrifugally with the axis of the stator 200 as the center, and eventually the insulating liquid 120 is thrown around the agitation structure 300, so that part of the insulating liquid 120 is centrifugally thrown to the inner peripheral surface of the stator 200 around the agitation structure 300, ensuring uniform contact of the insulating liquid 120 with the inner peripheral surface of the stator 200 around the agitation structure 300, and the insulating liquid 120 can continue to penetrate from the inner peripheral surface of the stator 200 towards the direction away from the agitation structure 300, eventually the insulating liquid 120 absorbs the heat from the stator 200 and flows back into the housing 100, allowing the housing 100 to quickly absorb heat from the stator 200, and the stator 200 can be quickly and uniformly cooled, thereby improving the operating efficiency of the motor 1000. It can be understood that, in the agitation structure 300, the insulating liquid 120 is agitated to the inner peripheral surface of the stator 200, and there will also be some insulating liquid 120 splashing onto the inner peripheral surface of the stator 200 and onto the surfaces of other components inside the housing 100 under high-speed movement, cooling and lowering the temperature of other components inside the housing 100. For example, part of the insulating liquid 120 splashed off by the agitation structure 300 will also splash onto the inner surface of the cavity 110, the shaft, rotor, bearings, and other components, or some insulating liquid 120 will directly splash from the surface of the agitation structure 300 onto the inner surface of the cavity 110.

As shown in Fig. 5, when the insulating liquid 120 is fully filled into the cavity 110, the agitation structure 300 rotating around its axis can agitate the insulating liquid 120 to rotate around the axis of the stator 200 in the cavity 110. The insulating liquid 120 can come into contact with the entire surface of the stator 200, and the insulating liquid 120 conveys the heat of the stator 200 to the housing 100 in a rotating motion, so that the housing 100 can quickly absorb the heat of the stator 200, and the housing 100 can quickly dissipate the heat of the stator 200, achieving rapid and effective cooling of the motor 1000, and improving the efficiency of the motor 1000.

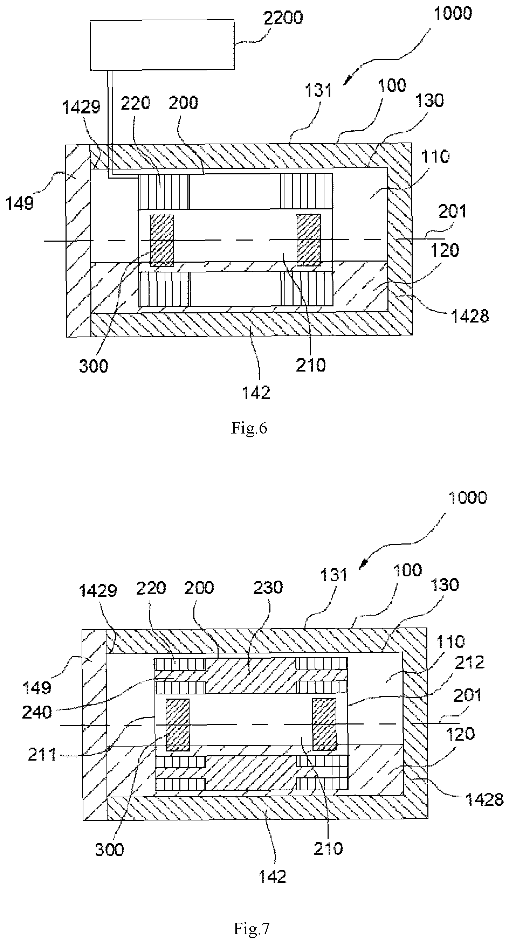

Please refer to Fig. 6, in some embodiments, the end of the stator 200 is provided with a winding coil 220, the winding coil 220 is used to generate a magnetic field after being energized, and the agitation structure 300 agitate the insulating liquid 120 to be in contact with the winding coil 220 at least. The motor 1000 also includes a conductor cable connecting the winding coil 220, the conductor cable passes through the housing 100 at one end away from the winding coil 220, and is connected to an external driver 2200 of the motor 1000 to obtain current from the driver 2200. The driver 2200 is an integrated circuit that can actively work to control the motor 1000 to operate in the set direction, speed, angle, and response time, that is, the driver 2200 inputs current to the winding coil 220, achieving control of the direction, speed, angle, and response time of the motor 1000. Due to the need for the winding coil 220 to convert electrical energy into magnetic field energy for a long time, the heat generation of winding coil 220 is most obvious inside motor 1000. It is easy to concentrate the heat generation inside motor 1000 at the winding coil 220, and the agitation structure 300 of the present application embodiment agitate the insulating liquid 120 in contact with the winding coil 220, ensuring that the agitation structure 300 agitate the insulating liquid 120 to cool the winding coil 220, thereby ensuring that the heat generation inside motor 1000 is cooled firstly, and ensuring the operating efficiency of motor 1000.

As an implementation, as shown in Fig. 7, the stator 200 is also provided with an iron core 230, and the winding coil 220 is set on the iron core 230. In particular, the end of the iron core 230 is provided with a cylinder 240 arranged in the axial direction of the stator 200, and the winding coil 220 is wound around the cylinder 240. There is an assembly gap between the stator 200 and the inner surface of the side shell 142. The assembly gap allows the insulating liquid 120 to flow in, so that the insulating liquid 120, which has absorbed the heat of the stator 200, can quickly flow into the assembly gap, thereby facilitating the rapid transfer of heat from the stator 200 to the side shell 142. Of course, it is also possible for the iron core 230 of the stator 200 to directly contact the inner surface of the side shell 142, thereby facilitating the heat of the winding coil 220 to be conducted to the side shell 142 through the iron core 230. The stator 200 has coils 220 on both opposite ends to ensure a balanced magnetic field layout within the motor 1000. The first opening 211 and second opening 212 of the inner rotating cavity are respectively located at the opposite ends of the stator 200. In order for the coils 220 at both ends of the stator 200 to be in contact with the insulating liquid 120 for cooling, the motor 1000 is equipped with two agitation structures 300, which agitate the insulating liquid 120 to come into contact with the coils 220 at both opposite ends of the stator 200. To ensure the assembly relationship between the coils 220 and the side shell 142, there must be a gap between the coils 220 and the inner surface of the side shell 142, meaning the coils 220 do not directly contact the side shell 142. Therefore, the coils 220 need to be agitated by the agitation structure 300 to make contact with the insulating liquid 120 for cooling and temperature reduction.

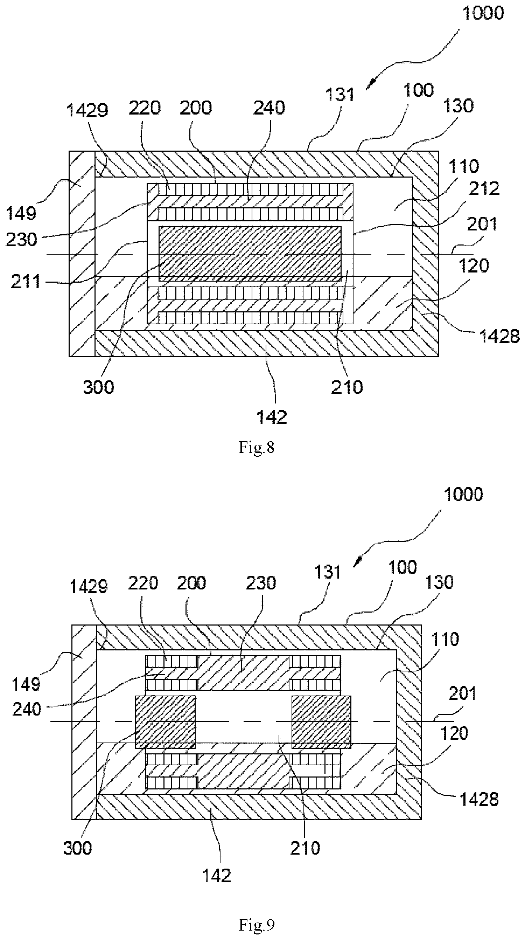

In other embodiments, please refer to Fig. 8, which is generally similar to the embodiment shown in Fig. 7, except that the iron core 230 is provided with multiple pillars 240 extending from one end of the stator 200 to the other end. the multiple pillars 240 are equidistantly arranged around the axis of the stator 200, and the winding coil 220 is wounded around the multiple pillars 240. As a result, the winding coil 220 is laid out from one end of the stator 200 to the other end of the stator 200, that is, the winding coil 220 is not only set at the end of the stator 200, but is wounded along the entire axis of the stator 200. In order to ensure effective cooling of the winding coil 220, the agitation structure 300 can also extend from the first opening 211 of the inner rotating cavity to the second opening 212. The agitation structure 300 can be equipped with magnetic components, so that the stator 200 and the agitation structure 300 can electromagnetically cooperate, thereby outputting rotational torque for the agitation structure 300, which can serve as the rotor outputting rotational torque for the motor 1000. At the same time, the agitation structure 300 can also agitate the insulating liquid 120 to cool and lower the temperature of the stator 200 winding coil 220.

In other embodiments, which is similar to the embodiment shown in Fig. 8, except that the winding coil 220 is laid out from one end of the stator 200 to the other end, but the winding coil 220 is denser at the two opposite ends of the stator 200, that is, the heat generation of the winding coil 220 at the ends of the stator 200 is still relatively high. In order to ensure the cooling and temperature reduction of the end of the stator 200, two agitation structures 300 are set in the motor 1000, respectively near the two opposite ends of the stator 200, and agitate the insulating liquid 120 to cool and reduce the temperature of the two opposite ends of the stator 200.

It can be understood that the agitation structure 300 of the present application is accommodated in the inner rotating cavity 210, and is not limited to the above-mentioned manner. As shown in Fig. 9, the agitation structure 300 can also be partially accommodated in the inner rotating cavity 210, and near the end of the stator 200, the agitation structure 300 can still agitate the insulating liquid 120 to cool and reduce the temperature of the end of the stator 200. The part of the agitation structure 300 extending out of the inner rotating cavity 210 can effectively cool other components inside the cavity 110, thereby improving the cooling and heat dissipation efficiency of the entire motor 1000.

Please refer to FiglO. In this embodiment, the motor 1000 also includes a rotor 400, the rotor 400 is rotatably arranged in the inner rotating cavity, and electromagnetically cooperates with the stator 200. The agitation structure 300 can rotate synchronously with the rotor 400. The axis of the rotor 400 is coaxially aligned with the axis of the stator 200. The axis of the rotor 400 is the axis around which the rotor 400 can rotate. Since the rotor 400 is located within the inner rotating cavity, when the coils 220 of the stator 200 are energized, the coils 220 generate an alternating magnetic field. The rotor 400 electromagnetically cooperates with the coils 220, causing the rotor 400 to rotate relative to the stator 200 under the action of the magnetic field. As a result, the rotor 400 can output rotational torque to convert magnetic energy into mechanical energy. The agitation structure 300 rotates synchronously with the rotor 400, which can ensure that the agitation structure 300 and the rotor 400 rotate at the same speed, avoiding speed differences between the agitation structure 300 and the rotor 400, thereby ensuring the maximum rotation speed of the agitation structure 300 and increasing the weight of insulating liquid 120 agitated by the agitation structure 300 per unit time, so that more insulating liquid 120 can come into contact with the stator 200 for cooling, thereby improving the cooling efficiency of the motor 1000. It can be understood that the agitation structure 300 can rotate under the action of the rotor 400, that is, the rotor 400 drives the agitation structure 300 to rotate synchronously, thereby ensuring the maximum rotation speed of the agitation structure 300 to maximize the cooling efficiency of the motor 1000.

Of course, another implementation can also be provided, which is roughly similar to the implementation shown in Fig. 9. The difference is that the agitation structure 300 itself cooperates electromagnetically with the stator 200, so that the agitation structure 300 itself rotates under the electromagnetic force, and the rotation speed of the agitation structure 300 can be greater than the rotation speed of the rotor 400, so that the agitation structure 300 converts some of the electrical energy into rotational mechanical energy, and uses the rotational mechanical energy to agitate the insulating liquid 120 to cool and lower the temperature of the stator 200. It can be understood that the agitation structure 300 can be equipped with a rotating winding coil or a rotating permanent magnet, and utilize the electromagnetic cooperation between the rotating winding coil or rotating permanent magnet and the winding coil 220 of the stator 200, so that the agitation structure 300 obtains rotational driving force. It can be understood that in this implementation, the rotor 400 is mainly responsible for outputting rotational torque, while the agitation structure 300 is mainly responsible for outputting the rotational energy of agitating insulating liquid 120. The rotor 400 and the agitation structure 300 are independent of each other and also asynchronous, but the speed of the agitation structure 300 needs to be greater than that of the rotor 400 to ensure cooling efficiency. The agitation structure 300 can use a high-speed rotating structure with low heat generation, that is, it can use some electrical energy to drive the rotation of the agitation structure 300, thereby dissipating heat and improving the mechanical energy efficiency of the motor 1000.

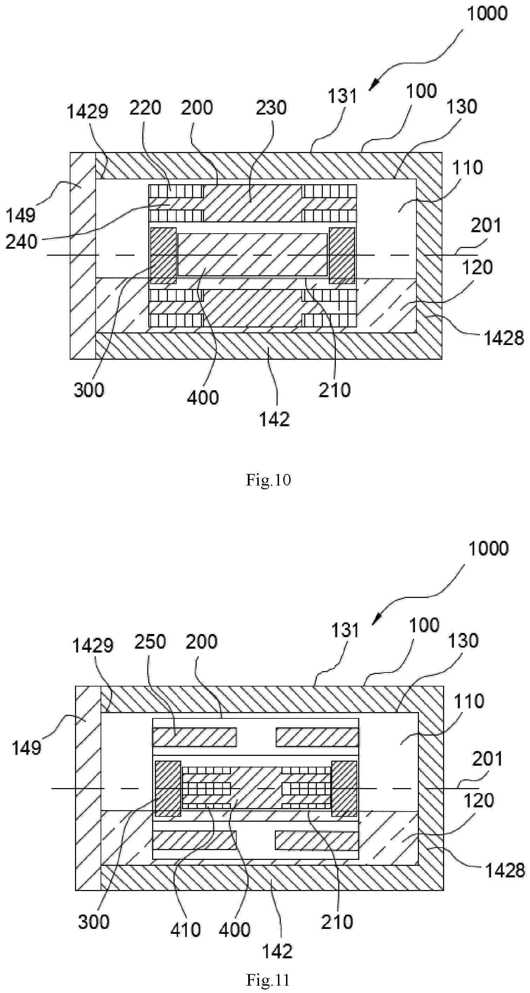

In other embodiments, please refer to Fig. 11, which is generally similar to the embodiment shown in Fig. 10, except that the stator 200 is provided with stator magnets 250, and the rotor 400 is provided with rotor winding coil 410. The agitation structure 300 agitate the insulating liquid 120 and contacts with the stator magnet 250 to effectively cool and lower the temperature of the stator magnet 250. In the embodiments of the present application, the forms of the stator 200 and the rotor 400 are not limited to the above-mentioned ways. Any structural form aimed at outputting rotational torque through electromagnetic cooperation between the stator 200 and the rotor 400 can be used as an embodiment of the present application.

It is understood that the motor 1000 in the embodiments of the present application is not limited to the above-mentioned ways. Any motor 1000 with similar functions to the above embodiments or a structural form combining with the motor 1000 of the above embodiments can be used as an embodiment of the present application. The type of motor 1000 in the implementation of the present application is not limited. For example, synchronous motors, asynchronous motors, high-speed motors, flat wire motors, and low-voltage motors can all be used as the motor 1000 in the implementation of the present application.

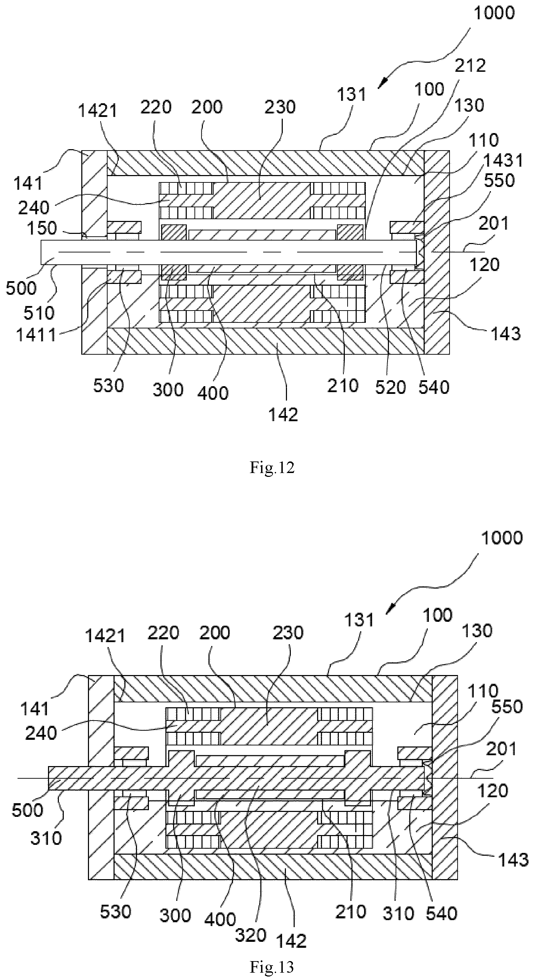

Furthermore, please refer to Fig. 12. The motor 1000 also includes a shaft 500, with one end of the shaft 500 disposed in the cavity 110, and the rotor 400 and the agitation structure 300 are fixed on the periphery of the shaft 500. The shaft 500 serves as the rotating torque output shaft of the motor 1000, with the axis of the shaft 500 being coaxially aligned with the axis of the stator 200 and the axis of the rotor 400. By fixing the rotor 400 and agitation structure 300 on the periphery of the shaft 500, the rotor 400 rotates under the action of electromagnetic force, driving the shaft 500 to rotate. The shaft 500 drives the agitation structure 300 to rotate, and outputs rotational torque.

In some embodiments, the shaft 500 has a first end 510 and a second end 520 set relative to the first end 510. The first end 510 passes through the first end cap 141, and a first bearing 530 is set between the first end 510 and the first end cap 141. The second end 520 is housed within the cavity 110, extends out of the second opening 212 of the stator 200, extends into the interior of the second end cap 143, and a second bearing 540 is set between the second end 520 and the second end cap 143. An elastic washer 550 is also set between the second bearing 540 and the second end cap 143 to buffer and absorb lateral vibrations of the shaft 500. The rotor 400 and the agitation structure 300 are fixedly mounted on the shaft 500 and are located between the first end 510 and the second end 520.

In some embodiments, the agitation structure 300 and the rotor 400 are fixed on the periphery of the shaft 500, ensuring that the agitation structure 300 and the rotor 400 rotate synchronously. The agitation structure 300 is driven to rotate by the torque output from the shaft 500, which can be realized by using a smaller portion of the mechanical energy to agitate the insulating liquid 120 from the inner rotating cavity 210 of the stator 200 to the inner peripheral surface of the stator 200 by means of the agitation structure 300, maximizing the cooling efficiency of the stator 200, and further improving the mechanical energy output, forming a virtuous cycle, and increasing the efficiency of the motor 1000.

Furthermore, in the embodiment shown in Fig. 12, the housing 100 is provided with a shaft hole 150, one end of the shaft 500 extends out of the shaft hole 150 of the housing 100, and the end of the shaft 500 extending out of the housing 100 is used to output the rotating torque.

In particular, the shaft hole 150 is set in the first end cover 141. The inner side of the first end cover 141 is provided with the first bearing support 1411, and the first bearing 530 is fixed on the first bearing support 1411. The first shaft 510 passes through the first bearing 530 and the shaft hole 150 in sequence, ensuring the rotational torque output efficiency of the first shaft 500 and avoiding the wobbling of the first shaft 500. The second end cover 143 is provided with the second bearing support 1431, the second bearing 540 is fixed on the second bearing support 1431, and an elastic washer 550 is placed between the second bearing 540 and the second bearing support 1431. In order to avoid friction between the inner surface of the shaft hole 150 and the outer peripheral side surface of the shaft 500, there is a gap fit between the inner surface of the shaft hole 150 and the outer peripheral side surface of the shaft 500 to ensure the effective rotation of the shaft 500. The first end 510 extending from the housing 100 can be directly connected to the load, or it can be connected to the load through a coupling. In this embodiment, the load can be a propeller 2100, that is, the motor 1000 drives the propeller 2100 to rotate, thereby providing propulsion force for the watercraft 3000.

In other embodiments, please refer to Fig13, which is generally similar to the embodiment shown in Fig. 12, with the difference that the agitation structure 300 is provided with a first shaft body 310 passing through the first end cover 141 and a second shaft body 320 passing through the rotor 400. The end of the first shaft body 310 is used to output rotational torque. The second shaft 320 is fixed with the rotor 400 to receive the rotating torque of the rotor 400, thereby driving the agitation structure 300 to rotate. The first shaft 310 of the agitation structure 300 at the other end rotates in coordination with the second end cover 143.

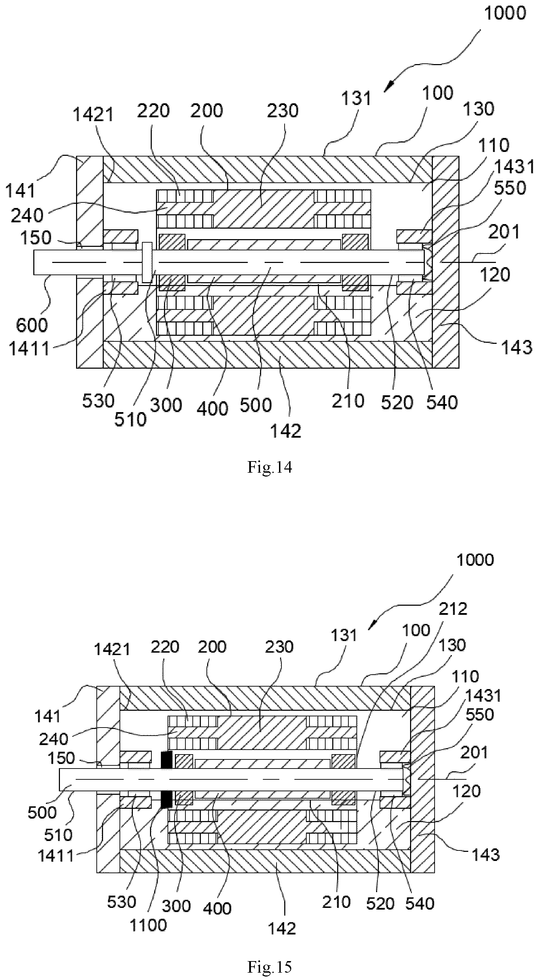

In other embodiments, please refer to Fig14, which is generally similar to the embodiment shown in Fig. 12, except that both the first end 510 and the second end 520 are accommodated within the cavity 110. The motor 1000 also includes a load shaft 600, one end of the load shaft 600 passes through the first end cover 141, extends into the cavity 110, and is connected to the first end 510 through a coupling, so that the load shaft 600 rotates synchronously with the shaft 500. It is understood that, in the present embodiment, the method of outputting the rotational torque of motor 1000 is not limited to the above-mentioned direct output through the shaft 500, or output through the first shaft body 310 of agitation structure 300, or output through coupling to connect to other shaft bodies. Any structural form intended to output the rotational torque of rotor 400 to the load end through a rigid structure can be used as an embodiment of motor 1000 in the present application.

Furthermore, please refer to Fig15, the motor 1000 includes a first blocking member 1100, which is fixed on shaft 500 and located between agitation structure 300 and shaft hole 150 to block agitation structure 300 from throwing off the insulating liquid 120 towards the shaft hole 150.

In this embodiment, the first blocking member 1100 covers the agitation structure 300, so that the first blocking member 1100 forms a 'barrier' between the agitation structure 300 and the shaft hole 150, effectively blocking the insulation liquid 120 splashed from the agitation structure 300 towards the shaft hole 150. It can be understood that when the insulation liquid 120 is not fully filled in the cavity 110, the agitation structure 300 agitate the insulation liquid 120 to splash radially towards the inner peripheral surface of the stator 200. Some insulation liquid 120 will collide with the stator 200 in a high-speed motion and splash in other directions. Some insulation liquid 120 will leave from the outer end of the agitation structure 300 and directly splash towards the inner surface of the housing 100. The splashed insulation liquid 120 will move towards the shaft hole 150. If there is no the first blocking member 1100 between the agitation structure 300 and the shaft hole 150, it will cause some insulation liquid 120 to leak and flow out from the shaft hole 150, resulting in insulation liquid 120 loss. Insulation liquid 120 loss will reduce the heat dissipation efficiency of the motor 1000, affecting the operational efficiency of the motor 1000. Therefore, a first blocking member 1100 is provided between the agitation structure 300 and the shaft hole 150, which can effectively block the insulation liquid 120 from splashing and leaking towards the shaft hole 150 after the agitation structure 300 agitate without filling the cavity 110. In particular, the first blocking member 1100 is tightly connected to the shaft 500 to prevent the insulation liquid 120 from flowing from the gap between the first blocking member 1100 and the shaft 500 to the shaft hole 150, thereby effectively preventing leakage of the insulation liquid 120 and reducing the efficiency of insulation liquid 120 loss. Since the first blocking member 1100 is located between the shaft hole 150 and the agitation structure 300 near the shaft hole 150, it effectively prevents the insulation liquid 120 from leaking from the shaft hole 150.

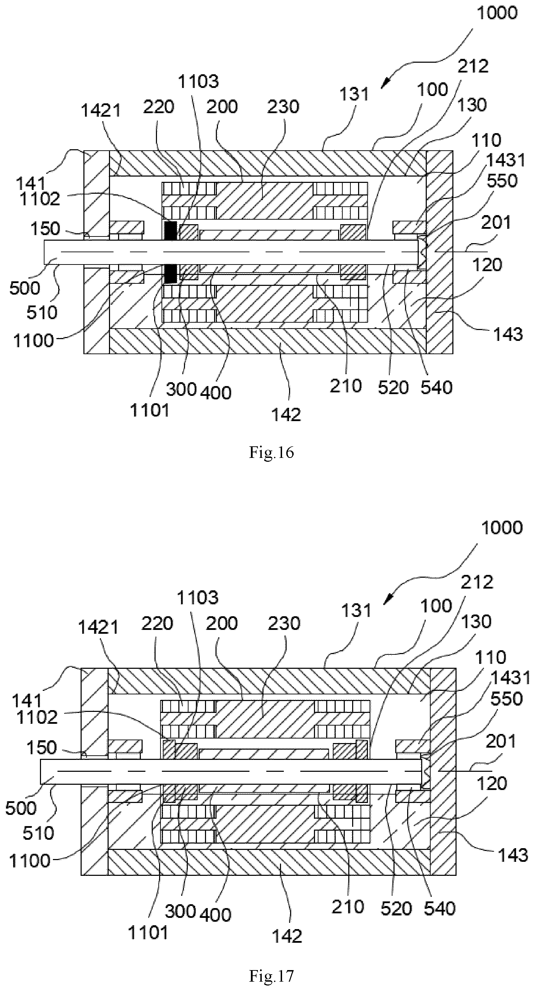

In some embodiments, as shown in Fig. 16, the first blocking member 1100 is provided with a first isolation plate 1101, the first isolation plate 1101 is accommodated in the inner rotating cavity 210, the first isolation plate 1101 has a cylindrical surface 1102 arranged around the rotating shaft 500, the gap between the cylindrical surface 1102 and the inner peripheral surface of the inner rotating cavity 210 is coordinated, and the diameter of the cylindrical surface 1102 is larger than the outer diameter of the agitation structure 300. The first isolation plate 1101 is a circular plate. The gap between the first isolation plate 1101 and the inner peripheral surface of the inner rotating cavity 210 is small, effectively preventing the insulation liquid 120 splashed by the agitation structure 300 from splashing towards the outside of the inner rotating cavity 210.

In particular, the first isolation plate 1101 has a first blocking surface 1103 deviating from the shaft hole 150, and the first blocking surface 1103 is substantially perpendicular to the axial direction of the shaft 500. The first blocking surface 1103 is connected to the cylindrical surface 1102. The cylindrical surface 1102 is in cooperation with the gap between the inner peripheral surface of the inner rotating cavity 210, so that the first isolation plate 1101 can rotate with the shaft 500 inside the inner rotating cavity 210. The first isolation plate 1101 is close to the opening of the shaft hole 150 facing the inner rotating cavity 210, to ensure that there is enough installation space for the agitation structure 300 and the rotor 400 inside the inner rotating cavity 210. It can be understood that, when the splashed insulating liquid 120 moves to the first blocking surface 1103, the first blocking surface 1103 drives the insulating liquid 120 in contact with it to move centrifugally under rotational motion, eventually throwing it to the inner peripheral surface of the stator 200 to effectively cool the stator 200. In particular, the first blocking surface 1103 is spaced apart from the agitation structure 300 for easy disassembly and maintenance of the first isolation plate 1101 and the agitation structure 300 separately.

In other embodiments, as shown in Fig. 17, which is generally similar to the embodiment shown in Fig. 16, except that the first isolation plate 1101 is integrally set with the agitation structure 300. The first isolation plate 1101 is set on one side of the agitation structure 300 away from the rotor 400, so that the first isolation plate 1101 can block the lateral splashing insulating liquid 120 and make the splashing insulating liquid 120 move towards the inner peripheral surface of the stator 200. In particular, the first isolation plate 1101 extends from the end face of the agitation structure 300 away from the rotor 400, and the outer diameter of the first isolation plate 1101 is larger than the outer diameter of the agitation structure 300, so that the first isolation plate 1101 can effectively block the movement of the splashing insulating liquid 120 from the agitation structure 300.

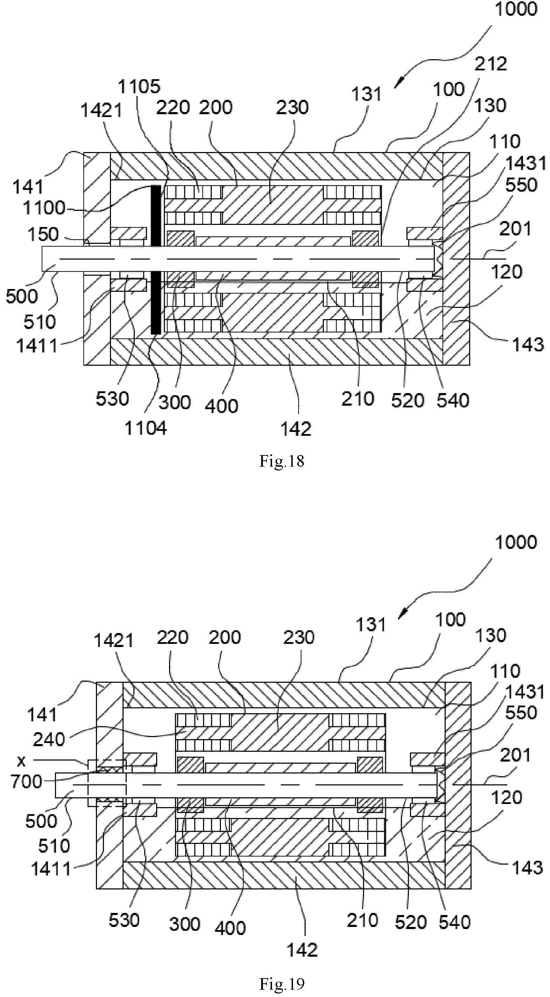

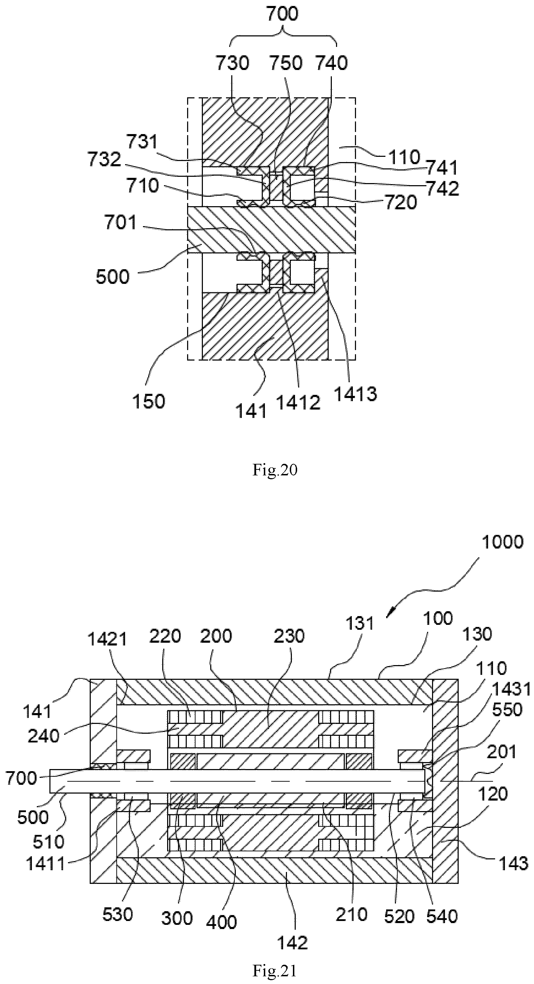

In another implementation, as shown in Fig. 18, it is generally the same as the embodiment shown in Fig. 16, except that the first blocking member 1100 is provided with a second isolation plate 1104, the second isolation plate 1104 is located outside the inner rotating cavity 210, and the second isolation plate 1104 covers the opening of the inner rotating cavity 210 facing the shaft hole 150. The second isolation plate 1104 can be a circular plate, a square plate, or a hexagonal plate, that is, any structural form intended to cover the opening of the inner rotating cavity 210 can be used as an embodiment of the second isolation plate 1104. In particular, the second isolation plate 1104 has a second blocking surface 1105 deviating from the shaft hole 150, and the second blocking surface 1105 is spaced from the end face of the stator 200. The second blocking surface 1105 completely covers the inner rotating cavity 210 facing the opening of the shaft hole 150. After the agitation structure 300 agitate the insulating liquid 120 towards the inner peripheral surface of the stator 200, some of the insulating liquid 120 will fly out from the inner rotating cavity 210 towards the opening of the shaft hole 150. The flying insulating liquid 120 will splash onto the second blocking surface 1105, being blocked by the second blocking surface 1105 from moving towards the shaft hole 150, achieving the prevention of insulating liquid 120 leakage, reducing the loss rate of insulating liquid 120, and ensuring the heat dissipation efficiency of the motor 1000. Due to the fact that the second isolation plate 1104 can rotate with the shaft 500, the second blocking surface 1105 can drive the insulating liquid 120 in contact with it to move centrifugally and finally sling it to the inner surface of the housing 100 around the second isolation plate 1104, thus causing the insulating liquid 120 that has taken away the heat of the stator 200 to fly towards the second isolation plate 1104 and be slung towards the housing 100, ultimately achieving heat exchange with the housing 100, thereby improving the heat dissipation efficiency of the motor 1000. Furthermore, please refer to figures 19 and 20, the motor 1000 also includes a seal 700, the seal 700 is fixed to the housing 100, and seals the gap between the outer peripheral wall of the shaft 500 and the inner surface of the shaft hole 150.

In this embodiment, the seal 700 is fixed to the first end cover 141. The seal 700 is provided with a transverse hole 701, the shaft 500 passes through the transverse hole 701 of the seal 700, the outer peripheral side surface of the shaft 500 closely matches the inner surface of the transverse hole 701, the outer peripheral side surface of the seal 700 closely matches the inner peripheral side wall of the shaft hole 150, so that the seal 700 is sealed between the outer peripheral side surface of the shaft 500 and the inner surface of the shaft hole 150, the seal 700 is used to prevent the medium outside the housing 100 from entering the cavity 110, and also to prevent the insulation liquid 120 inside the housing 100 from leaking to the outside of the housing 100. The sealing member 700 has elastic deformation performance, so that the sealing member 700 can elastically support the outer peripheral side surface of the rotating shaft 500 and the inner surface of the rotating shaft hole 150, to increase the sealing performance of the sealing member 700, and can also adapt to the floating of the rotating shaft 500, ensuring the sealing between the rotating shaft 500 and the first end cover 141.

In some embodiments, the sealing member 700 is provided with a first sealing lip edge 710 facing the rotating shaft hole 150 and a second sealing lip edge 720 facing the inside of the cavity 110. The first sealing lip edge 710 is used to prevent the medium outside the housing 100 from entering the cavity 110, and the second sealing lip edge 720 is used to prevent the insulating liquid 120 from flowing out of the cavity 110.

In particular, the seal 700 is provided with a first seal ring 730 and a second seal ring 740 opposite the first seal ring 730, and a seal gasket 750 set between the first seal ring 730 and the second seal ring 740. The outer diameters of the first seal ring 730 and the second seal ring 740 are equal. When the first seal ring 730 and the second seal ring 740 are in a naturally expanded state, the outer diameters of the first seal ring 730 and the second seal ring 740 are both greater than the inner diameter of the shaft hole 150, to ensure that the outer walls of the first seal ring 730 and the second seal ring 740 can tightly contact with the inner surface of the shaft hole 150. Sealing gasket 750 is a rigid gasket, with the first sealing ring 730 and the second sealing ring 740 respectively attached to the opposite sides of the seal. Sealing gasket 750 is used to support the first sealing ring 730 and the second sealing ring 740, to prevent excessive deformation of the first sealing ring 730 and the second sealing ring 740 under pressure, and to prevent gaps between the first sealing ring 730 and the second sealing ring 740 and the inner surface of the shaft hole 150.

In particular, the first end cover 141 is provided with a first sealing flange 1412 and a second sealing flange 1413 on the inner surface of the shaft hole 150. The second sealing flange 1413 is close to the cavity 110. The distance from the top of the first seal flange 1412 to the inner surface of the shaft hole 150 is less than the distance from the top of the second seal flange 1413 to the inner surface of the end cover 149 shaft 500. The second seal ring 740 is sandwiched between the first seal flange 1412 and the second seal flange 1413. The first seal ring 730 abuts away from one side of the second seal ring 740 on the back of the first seal flange 1412. There is an assembly gap between the sealing gasket 750 and the first seal flange 1412.

The first seal ring 730 has a first bottom ring 731 and a first side ring 732 extending from the first bottom ring 731, the first bottom ring 731 fits against the inner surface of the shaft hole 150, the first side ring 732 extends from one end of the first bottom ring 731 near the first seal flange 1412, and the first side ring 732 fits against the first seal flange 1412 and the sealing gasket 750. The first sealing lip edge 710 extends from the end of the first side ring 732 away from the first bottom ring 731 towards the outer side of the cavity 110. The first sealing lip edge 710 closely fits the outer peripheral side surface of the shaft 500. One side of the first sealing lip edge 710 that fits the outer peripheral side surface of the shaft 500 is provided with multiple first tooth-shaped sealing ribs. The multiple first tooth-shaped sealing ribs are evenly distributed along the axial direction of the shaft 500, thereby forming a multi-seal structure to improve sealing performance. Since the first sealing lip edge 710 extends towards the outer side of the cavity 110, when the first sealing ring 730 is subj ected to the pressure of the outer medium of the cavity 110, the first sealing lip edge 710, the first side ring 732, and the first bottom ring 731 tend to expand outward. This causes the first sealing lip edge 710, the first side ring 732, and the first bottom ring 731 to tightly fit the outer peripheral side surface of the shaft 500, the sealing gasket 750, and the inner surface of the shaft hole 150, respectively, effectively preventing the entry of external medium into the cavity 110.

The second sealing ring 740 has a second bottom ring 741 and a second side ring 742 extending from the second bottom ring 741. The second bottom ring 741 fits the inner surface of the shaft hole 150, and the second side ring 742 extends from one end of the second bottom ring 741 near the first sealing flange 1412. The second side ring 742 fits the first sealing flange 1412 and the sealing gasket 750. The second sealing lip edge 720 extends from the end far from the first bottom ring 731 of the second side ring 742 towards the cavity 110. The second sealing lip edge 720 tightly fits the outer peripheral side surface of the shaft 500. The second sealing lip edge 720 is provided with multiple second tooth-shaped sealing ribs on one side of the outer peripheral wall of the shaft 500, and the multiple second tooth-shaped sealing ribs are evenly distributed along the axial direction of the shaft 500, thereby forming a multi-seal structure to improve sealing performance. Since the second sealing lip edge 720 extends towards the inner side of the cavity 110, when the second sealing ring 740 is subjected to the pressure of the insulating liquid 120 on the inner side of the cavity 110, the second sealing lip edge 720, the second side ring 742, and the second bottom ring 741 tend to expand outward, so that the second sealing lip edge 720, the second side ring 742, and the second bottom ring 741 are tightly attached to the outer peripheral wall of the shaft 500, the sealing gasket 750, and the inner surface of the shaft hole 150, thereby effectively preventing the insulating liquid 120 inside the cavity 110 from leaking to the outside of the cavity 110.

It can be understood that, in other embodiments, the first sealing ring 730 and the second sealing ring 740 can be directly abutted, making the structure of the sealing member 700 simple and reducing production costs.

Furthermore, please refer to Fig. 21, in some embodiments, the rotor 400 is at least partially immersed in the insulating liquid 120. For clarity, the state of the motor 1000 as shown in Fig. 21 is taken as an example. With the rotor 400 horizontally set at the axis center and the rotor 400 in a stationary state, and if the insulating liquid 120 is not filled in the cavity 110, the distance from the upper surface of the insulating liquid 120 to the axis center of the rotor 400 is less than the outer diameter of the rotor 400, allowing the rotor 400 to be at least partially immersed in the insulating liquid 120. When the rotor 400 rotates, the rotor 400 can agitate the insulation liquid 120, causing the insulation liquid 120 to be agitated and thrown off to the stator 200 around the rotor 400. The rotor 400 as a whole will also carry some insulation liquid 120 due to its own rotation. Finally, the insulation liquid 120 fully contacts the stator 200 and the rotor 400, effectively cooling both the stator 200 and the rotor 400.

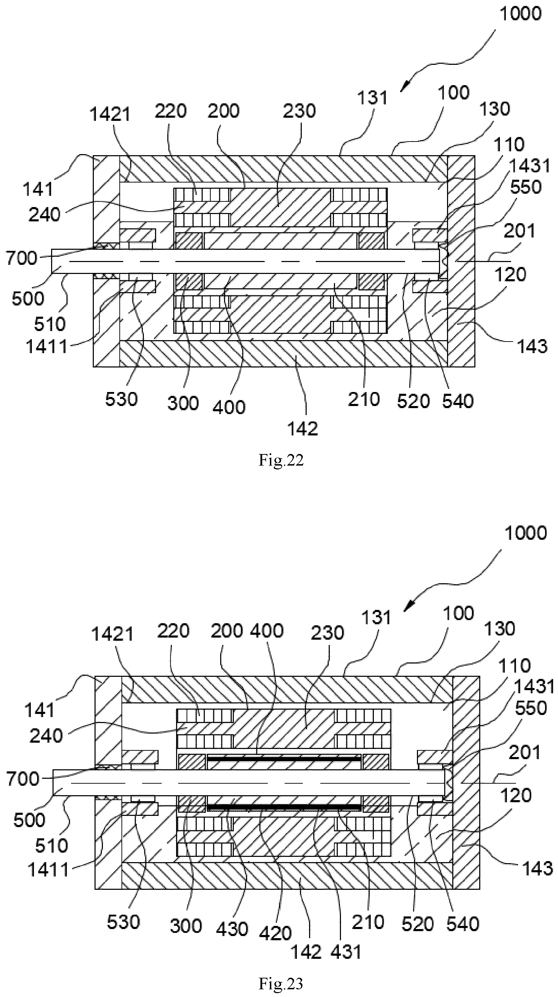

In other embodiments, please refer to Fig. 22, which is generally similar to the embodiment shown in Fig. 21. The difference is that when the motor 1000 is placed horizontally, the axis of the rotor 400 is horizontally set, the insulation liquid 120 is not filled in the cavity 110, and the insulation liquid 120 covers the axis of the rotor 400, the distance from the upper surface of the insulation liquid 120 to the axis of the rotor 400 is not limited, as long as the rotor 400 can contact the insulation liquid 120. When the rotor 400 rotates, the rotor 400 can still agitate the insulation liquid 120 to shake off to the stator 200 around the rotor 400, and the proportion of the rotor 400 immersed in the insulation liquid 120 increases, improving the cooling efficiency of the rotor 400.

Of course, it can be understood that when the cavity 110 is filled with insulation liquid 120, the rotor 400 is completely immersed in the insulation liquid 120, and the rotation of the rotor 400 can also drive the insulation liquid 120 to rotate, and the insulation liquid 120 can dissipate the heat of the rotor 400 and the stator 200 to the housing 100.

Furthermore, please refer to Fig. 23. Based on the embodiment of Fig. 21, the rotor 400 is provided with a magnetic component 420, which contacts the insulation liquid 120 to cool the magnetic component 420. The magnetic component 420 is a permanent magnet. By winding the coils of the stator 200 according to the electrical signal to generate an alternating magnetic field, the rotor 400 rotates relative to the stator 200 under the action of the alternating magnetic field. By immersing at least a portion of the rotor 400 in insulating liquid 120, after the rotor 400 rotates, the rotor 400 can agitate and throw off the insulating liquid 120. Due to the rotation of the magnetic member 420 around the axis of the rotor 400, the insulating liquid 120 can be drawn into the rotor 400 under the action of gravity after being agitated by the rotor 400, ensuring that the magnetic member 420 can come into contact with the insulating liquid 120, allowing the insulating liquid 120 to absorb the heat from the magnetic member 420. Of course, in other implementations, the magnetic components 420 can also be an electromagnetic coil, receiving electrical signals through the rotor 400, causing the rotor 400 and the stator 200 to generate alternating magnetic fields, thereby causing the rotor 400 to rotate relative to the stator 200.

In this embodiment, the rotor 400 is also provided with a rotor bracket 430, the rotor bracket 430 is provided with multiple slots 431 along the axial direction of the rotor 400, and multiple slots 431 are arranged in a circumferential direction around the axis of the rotor 400. The rotor 400 is provided with multiple magnetic pieces 420, each magnetic components 420 corresponding to insertion into each slot 431, so that multiple magnetic pieces 420 are fixed on the rotor bracket 430. The shaft 500 passes through the rotor bracket 430 and is fixed with the rotor bracket 430. In some embodiments, a portion of the magnetic components 420 can be immersed in the insulating liquid 120, so that the magnetic components 420 is in large contact with the insulating liquid 120, effectively cooling the magnetic components 420 to ensure its lifespan and the operational efficiency of the motor 1000.

In this embodiment, the agitation structure 300 is integrally set with or separated from the rotor 400.

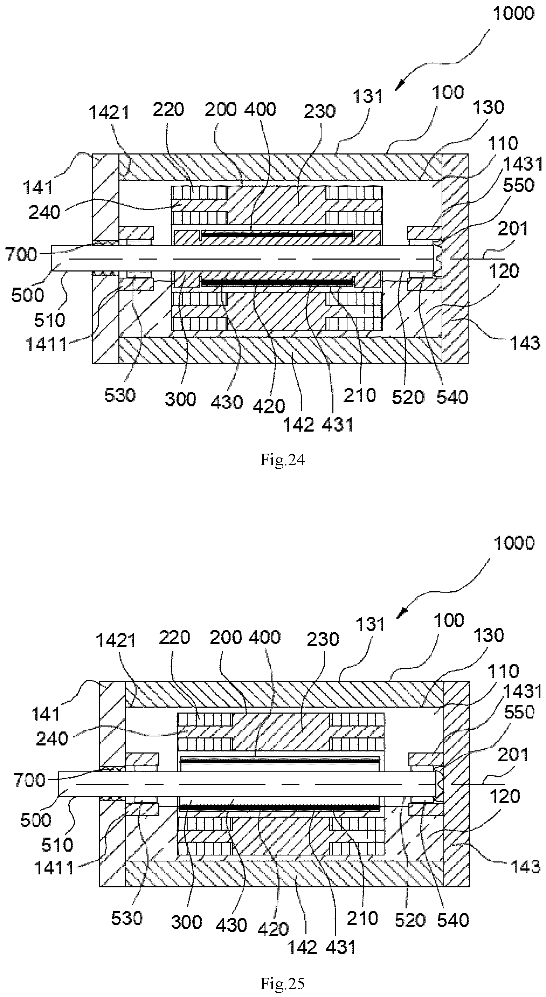

In some embodiments, please refer to Fig. 24, where the agitation structure 300 is integrally set with the rotor 400. In particular, based on the embodiment shown in Fig. 23, one end of the rotor bracket 430 extends along the axial direction of the rotor 400 to form the agitation structure 300, where a part of the rotor bracket 430 forms the agitation structure 300, making the agitation structure 300 integral with the rotor 400. By integrating the rotor 400 with agitation structure 300, it can prevent the rotation speed of agitation structure 300 from being lower than rotor 400, ensuring the weight of agitation structure 300 agitating the insulating liquid 120.

In other embodiments, please refer to Fig. 25. Unlike the embodiment shown in Fig. 24, a part of rotor support 430 and a part of a magnetic member 420 together form agitation structure 300, for example, the end of rotor support 430 and the end of multiple magnetic members 420 together form agitation structure 300, making agitation structure 300 integral with the rotor 400.

In other embodiments, as shown in Fig. 19, rotor 400 is isolated from agitation structure 300. In particular, the spacing between the end of the agitation structure 300 and the rotor support 430, that is, the spacing between the end of the agitation structure 300 and the rotor 400. By separating the agitation structure 300 from the rotor 400, it is convenient to disassemble and maintain the agitation structure 300, and different agitation structures 300 can be replaced according to different cooling needs. In some embodiments, the motor 1000 is provided with two agitation structures 300, with each agitation structure 300 located at each end of the rotor 400 and spaced apart at each end of the rotor 400.

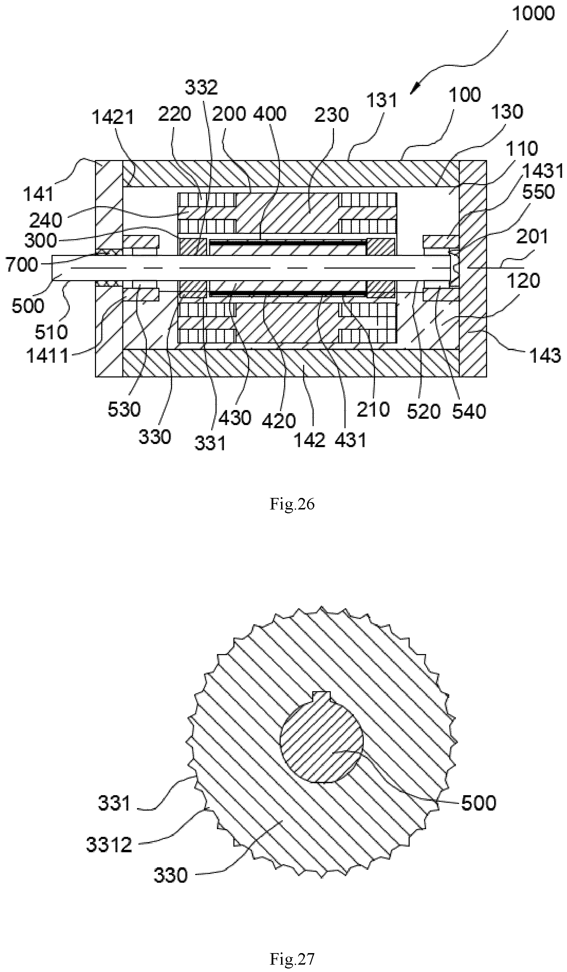

In some embodiments, please refer to Fig. 26, the agitation structure 300 is provided with a first rotating ring 330, the first rotating ring 330 has a first outer peripheral surface 331 with a preset surface roughness, so that the first outer peripheral surface 331 can adhere to a portion of the insulating liquid 120.

In particular, a first rotating ring 330 is provided with a first mating hole 332, and the inner surface of the first mating hole 332 is fixedly engaged with the outer peripheral side surface of the rotating shaft 500, so that the first rotating ring 330 is fixedly connected to the rotating shaft 500. The first rotating ring 330 can rotate around the axis of the rotating shaft 500. One end of the first rotating ring 330 is spaced apart from one end of the rotor 400. In some embodiments, the inner surface of the first mating hole 332 is provided with a fixed key, and the outer peripheral side surface of the rotating shaft 500 is provided with a keyway that cooperates with the fixed key, so that the first rotating ring 330 can rotate synchronously with the rotating shaft 500. Of course, in other embodiments, it is also possible for the inner surface of the first mating hole 332 to have a keyway, and for the outer peripheral side surface of the rotating shaft 500 to have a fixed key that cooperates with the keyway. In the present embodiment, the form of fixed engagement between the inner surface of the first mating hole 332 and the outer peripheral side surface of the rotating shaft 500 is not limited to the above method. The outer peripheral surface 331 is provided with a surface rough structure, and the surface rough structure can be arranged in a regular or irregular manner. The surface rough structure makes the outer peripheral surface 331 have a preset roughness. It can be understood that, when the surface of a rigid structure changes from smooth to rough, the interaction force properties between the surface of the rigid structure and the fluid gradually evolve from shear force to adhesion force. That is, when the surface roughness of the rigid structure is large to a certain extent, the interaction force between the surface of the rigid structure and the fluid is mainly adhesion force, that is, increasing the surface roughness can significantly enhance the adhesion of the rigid structure to the fluid.

In this embodiment, a preset roughness is set on the first outer peripheral surface 331 of the first rotating ring 330, thereby enhancing the adhesive force of the first outer peripheral surface 331 to the insulating liquid 120. Illustrated in the state diagram, the cavity 110 is not filled with insulating liquid 120. When a part of the first rotating ring 330 is immersed in the lower insulating liquid 120 and rotates with the shaft 500, the first outer peripheral surface 331 can lift some insulating liquid 120 from the lower position and rotate it up to the higher position. When the surface adhesive force of the first outer peripheral surface 331 is not sufficient to balance the centrifugal force of the insulating liquid 120, the higher insulating liquid 120 detaches from the first outer peripheral surface 331, is thrown off to the surroundings of the first rotating ring 330, and eventually thrown onto the inner surface of the stator 200 surrounding the first rotating ring 330, ultimately cooling the stator 200.

It can be understood that the cavity 110 is filled with insulating liquid 120, and the first rotating ring 330 is completely immersed in the insulating liquid 120. By using the first outer peripheral surface 331 with a preset roughness, the first outer peripheral surface 331 can drive the nearby insulating liquid 120 to rotate, causing the insulating liquid 120 near the first outer peripheral surface 331 to form laminar rotation. Then, the traction force between the liquids is used to drive the insulating liquid 120 inside the cavity 110 to rotate, so that the insulating liquid 120 transfers the heat of the stator 200 to the housing 100 in a rotating motion, increasing the heat transfer efficiency.

In this embodiment, please refer to Fig. 27, Fig. 28, and Fig. 29, where the first outer peripheral surface 331 is provided with multiple dimples 3311 and/or multiple protrusions 3312 to give the first outer peripheral surface 331 a predetermined roughness. The dimples 3311 and/or protrusions 3312 on the first outer peripheral surface 331 can be formed by a surface knurling process. Of course, in other embodiments, the first outer peripheral surface 331 can also be processed to form multiple dimples 3311 and/or multiple protrusions 3312 structures through processes such as grinding, turning, milling, etc.

In some embodiments, as shown in Fig. 27, the first outer peripheral surface 331 is provided with multiple protrusions 3312, each convexities 3312 being in the shape of a triangular pyramid. The multiple protrusions 3312 can be formed by the surface knurling process. The multiple protrusions 3312 are interconnected. Multiple convex hulls 3312 are arranged in an array according to the circumferential and axial directions of the first rotating ring 330. When the first outer peripheral surface 331 contacts the insulating liquid 120, space between adjacent two convex hulls 3312 can adhere some insulating liquid 120. Of course, in other embodiments, convex hulls 3312 can also be any shape such as a quadrangular prism, pentagonal prism, or hexahedral block. Multiple convex hulls 3312 can also be randomly distributed on the first outer peripheral surface 331, or arranged in a circular array.

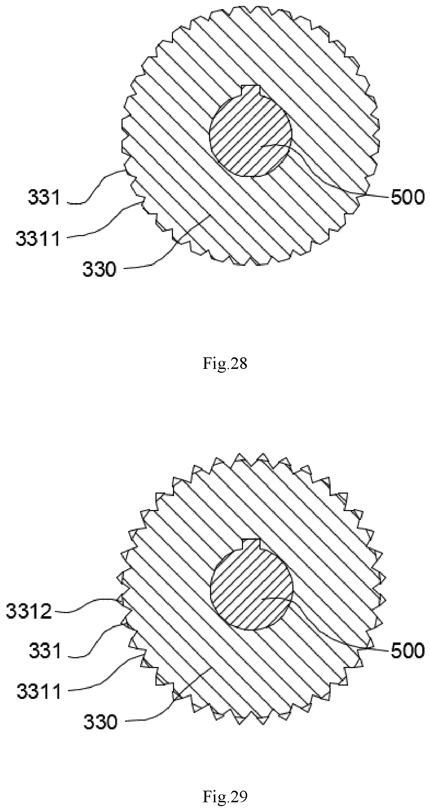

In other embodiments, as shown in Fig. 28, the first outer peripheral surface 331 is provided with multiple dimples 3311, each dimples 3311 is in a triangular pyramid shape. Multiple grooves 3311 can be formed by the surface knurling process. Multiple grooves 3311 are interconnected. Multiple recesses 3311 are arranged in an array according to the circumferential and axial directions of the first rotating ring 330. When the first outer peripheral surface 331 contacts the insulating liquid 120, a portion of the insulating liquid 120 can adhere to the space inside each dimple 3311. Of course, in other embodiments, the recesses 3311 can also be any shape such as square recesses, pentagonal recesses, or hexagonal recesses. Multiple recesses can also be randomly distributed on the first outer peripheral surface 331, or arranged in a circular array.

In other embodiments, as shown in Fig. 29, the first outer peripheral surface 331 is provided with multiple convex portions 3312 and multiple recesses 3311, each convex portion 3312 is hemispherical, and each dimples 3311 is hemispherical. Multiple concave dimples 3311 and multiple convex bulges 3312 are processed by surface milling process. Multiple convex bulges 3312 and multiple concave dimples 3311 are arranged in an array according to the circumferential and axial directions of the first rotating ring 330, and the convex bulges 3312 and concave grooves 3311 are alternately arranged. When the first outer peripheral surface 331 contacts the insulating liquid 120, partial insulating liquid 120 can adhere between each adjacent two convex bulges 3312 and within each concave dimple 3311. Of course, in other embodiments, concave dimples 3311 or convex bulges 3312 can also be of any shape such as square, triangle, or pentagon. Multiple concave dimples 3311 or multiple convex bulges 3312 can also be randomly distributed on the first outer peripheral surface 331, or arranged in a circular array.

It can be understood that, in the embodiments of the present application, the rough structure of the first outer peripheral surface 331 is not limited to the above-mentioned ways. Any rough structure aimed at giving the cylindrical surface a predetermined roughness can be used as an embodiment of the present application. For example, the embodiment of the present application can also be that the first rotating ring 330 is an iron ring, the first rotating ring 330 is formed by sand mold casting, and the first outer peripheral surface 331 has multiple convex bulges 3312 and concave dimples 3311 of sand grain sizes, so that the surface of the first outer peripheral surface 331 has a predetermined roughness.

In some embodiments, referring to both Fig. 26 and Fig. 27, where the preset surface roughness is directly proportional to the weight of insulating liquid 120 adhered per unit area within the first outer peripheral surface 331. This means that increasing the preset surface roughness of the first outer peripheral surface 331 will also increase the weight of insulating liquid 120 adhered per unit area within the first outer peripheral surface 331. When the cavity 110 is not filled with insulating material, by setting the preset surface roughness to be directly proportional to the weight of insulating liquid 120 adhered per unit area within the first outer peripheral surface 331, the weight of insulating liquid 120 thrown off by the first rotating ring 330 per unit time is equal to the total area of the first outer peripheral surface 331 multiplied by the weight of insulating liquid 120 adhered per unit area, then multiplied by the rotational speed of the first rotating ring 330. In other words, increasing the preset surface roughness of the first rotating ring 330 can increase the weight of insulating liquid 120 thrown off per unit time, thereby increasing the cooling rate of the stator 200 per unit time.

In some embodiments, the preset surface roughness is inversely proportional to the rated speed of rotor 400, that is, if the rated speed of rotor 400 increases, the preset surface roughness needs to decrease accordingly. It should be noted that the preset surface roughness is inversely proportional to the rated speed of rotor 400 under the condition that the weight of insulating liquid 120 that the first rotating ring 330 can throw off remains constant. In other words, if the rated speed of rotor 400 increases, the preset surface roughness of the first outer peripheral surface 331 decreases. When the cavity 110 is not filled with insulating material, by setting the preset surface roughness inversely proportional to the rated speed of rotor 400, the agitating loss of insulating liquid 120 and the cooling efficiency of motor 1000 can be optimized. It can be understood that as the rated speed of rotor 400 increases, the rated speed of the first rotating ring 330 will also increase accordingly. When the first rotating ring 330 operates at high speed, the movement rate of the insulation liquid 120 that is thrown off will also increase. By reducing the roughness of the first outer peripheral surface 331, the weight of insulation liquid 120 adhered per unit area on the first outer peripheral surface 331 will decrease. Due to the increase in the rated speed of the first rotating ring 330, the weight of insulation liquid 120 thrown off per unit time can remain constant, thereby maintaining the cooling efficiency of motor 1000. Therefore, under the high-rated speed of rotor 400, setting a smaller surface roughness for the first rotating ring 330 can improve the cooling efficiency of motor 1000.

As an implementation, when the insulation body is not filled in the cavity 110, by controlling the rated speed of the rotor 400 between 500rpm and 1500rpm, the weight ratio of the insulation liquid 120 thrown off in a unit time on the first outer peripheral surface 331 to the total weight of the insulation liquid 120 is less than or equal to 30%, so that the first rotating ring 330 can meet the cooling requirements of the stator 200 without throwing off a large amount of insulation liquid 120. Since the first outer peripheral surface 331 carries the insulation liquid 120 up through surface adhesion, the insulation liquid 120 has almost minimal rotational resistance to the first rotating ring 330, ensuring the output efficiency of the motor 1000 torque and effectively throwing off the insulation liquid 120 onto the inner surface of the surrounding stator 200. The insulating liquid 120 thrown off by the first outer peripheral surface 331 is adhered to and driven to a high position and finally thrown towards the inner surface of the stator 200. By controlling the relationship between the rotor 400 speed and the weight of the insulating liquid 120 thrown off by the first outer peripheral surface 331, the motor 1000 can handle the vast majority of operating conditions, and the weight of the thrown-off insulating liquid 120 will not be too large, thereby ensuring that the mechanical energy consumed by throwing off the insulating liquid is not too large, ensuring the safe operation of the motor 1000 under cooling and temperature reduction conditions, and achieving optimized operating efficiency.

In this embodiment, as the rated speed of the rotor 400 increases, the proportion of the weight of the insulation liquid 120 thrown off in a unit time by the first rotating ring 330 to the total weight of the insulation liquid 120 increases, and the two have a non-linear relationship. It can be understood that when the rated speed of the rotor 400 is 1500 rpm, the ratio of the weight of the insulation liquid 120 thrown off in a unit time by the first outer peripheral surface 331 to the total weight of the insulation liquid 120 is roughly equal to 30%. When the rated speed of the rotor 400 is 500 rpm, the ratio of the weight of the insulation liquid 120 thrown off in a unit time by the first outer peripheral surface 331 to the total weight of the insulation liquid 120 is roughly 20%. When the rated speed of the rotor 400 is 1000 rpm, the ratio of the weight of the insulation liquid 120 thrown off in a unit time by the first outer peripheral surface 331 to the total weight of the insulation liquid 120 is roughly 28%.

In this embodiment, the preset surface roughness is inversely proportional to the outer diameter of the first rotating ring 330, that is, if the surface roughness of the first outer peripheral surface 331 is increased, then the outer diameter of the first rotating ring 330 is reduced. It should be noted that the preset surface roughness and the outer diameter of the first rotating ring 330 are inversely proportional under the condition that the weight of the insulating liquid 120 thrown off by the first rotating ring 330 remains constant per unit time. In other words, if the surface roughness is increased, then the outer diameter of the first rotating ring 330 is reduced.

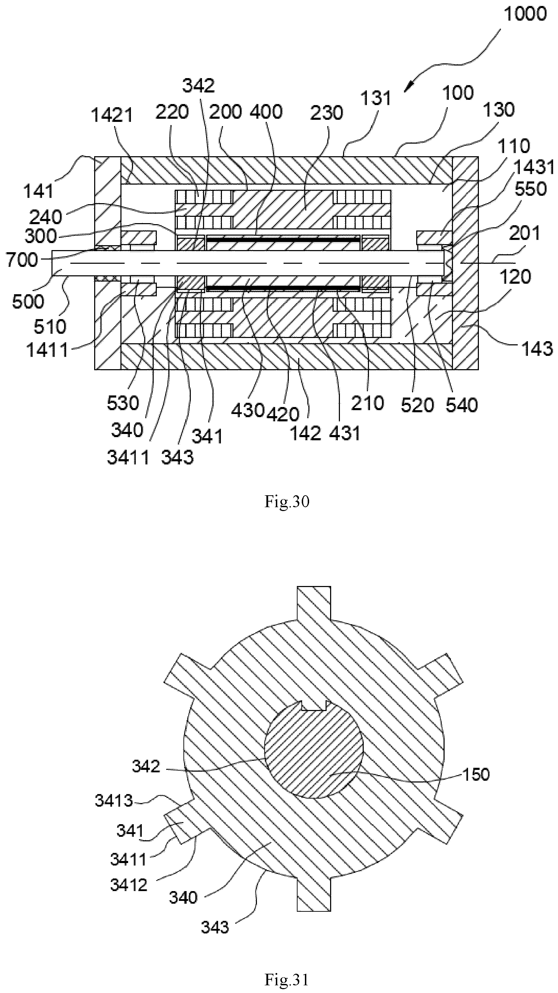

In other embodiments, please refer to Fig. 30, which is generally similar to the embodiment in Fig. 26, except that the agitation structure 300 is provided with a second rotating ring 340, and the peripheral side of the second rotating ring 340 is provided with a protrusion 341, one side of which is used to agitate the insulating liquid 120. The second rotating ring 340 has a second mating hole 342, and the inner surface of the second mating hole 342 is fixedly matched with the outer peripheral side surface of the rotating shaft 500. In some embodiments, the inner surface of the second mating hole 342 is provided with a fixed key, and the outer peripheral side surface of the rotating shaft 500 is provided with a keyway that matches the fixed key, so that the second rotating ring 340 and the rotating shaft 500 can rotate synchronously. Of course, in other embodiments, it is also possible to have a keyway on the inner surface of the second mating hole 342, and a fixed key that matches the keyway on the outer peripheral side surface of the rotating shaft 500. In the present exemplary embodiment, the form of fixed mating between the inner surface of the second mating hole 342 and the outer peripheral side surface of the rotating shaft 500 is not limited to the above method. The second rotating ring 340 can rotate around the axis of the rotating shaft 500. The axis of the second rotating ring 340 is coaxially aligned with the axis of the rotor 500. There is a gap between one end of the second rotating ring 340 and one end of the rotor 400. The second rotating ring 340 has a second outer peripheral surface 343, and a protrusion 341 is provided on the second outer peripheral surface 343. The protrusion 341 has a boss top surface 3411 that is away from the second outer peripheral surface 343. In order to ensure that the protrusion 341 can agitate the insulating liquid 120, with reference to the illustrated state, the axis of the rotor 500 is horizontally aligned, and the distance from the boss top surface 3411 to the axis of the rotor 500 is greater than the distance from the upper surface of the insulating liquid 120 to the axis of the rotor 500.

It can be understood that, please also refer to Fig. 30 and Fig. 31, when the insulating liquid 120 is not filled in the cavity 110, the second rotating ring 340 rotates with the shaft 500, and the protrusion 341 rotates around the axis of the shaft 500. The protrusion 341 has a first boss side surface 3412 and a second boss side surface 3413 connecting the boss top surface 3411. The first boss side surface 3412 and the second boss side surface 3413 are both substantially parallel to the axial direction of the second rotating ring 340. As explained in conjunction with the illustrated state, the axial direction of the shaft 500 in the drawings is set horizontally. The protrusion 341 rotates around the axis of the shaft 500, and the space between the first boss side surface 3412 or the second boss side surface 3413 and the second outer peripheral surface 343 can accommodate some insulating liquid 120. The first boss side surface 3412 or the second boss side surface 3413 will agitate some insulating liquid 120 from a low position to a high position, and when the pushing force of the first boss side surface 3412 or the second boss side surface 3413 on the insulating liquid 120 cannot balance with the centrifugal force of the insulating liquid 120, the insulating liquid 120 is thrown off to the surroundings of the second rotating ring 340, and eventually thrown towards the inner surface of the stator 200 surrounding the second rotating ring 340, to achieve cooling and temperature reduction of the stator 200.

It can be understood that, in this embodiment, both the first side surface of protrusion 3412 and the second side surface of protrusion 3413 are flat surfaces. In other embodiments, the second side surface of protrusion 3413 and the second side surface of protrusion 3413 can also be curved surfaces, and they may not be parallel to the axis of the rotating shaft 500. In other embodiments, the surface of the protrusion 341 can also be roughened to give the surface of the protrusion 341 a certain ability to adhere to insulating liquid 120, thereby increasing the weight of insulating liquid 120 thrown off by the agitation structure 300 per unit time.

Furthermore, as shown in Fig. 31, the second rotating ring 340 is provided with multiple convex platforms 341, which are evenly spaced along the circumference of the second rotating ring 340. The multiple convex platforms 341 are all set on the second outer peripheral surface 343. Combined with the schematic diagram 26, the axial horizontal setting of the shaft 500 is shown in the diagram. When the second rotating ring 340 rotates around the axis center of shaft 500, multiple protrusions 341 continuously agitate the insulating liquid 120, causing the agitated insulating liquid 120 to continuously rise, allowing the low-level insulating liquid 120 to be continuously raised to a high position, and ultimately causing the inner surface of the stator 200 around the second rotating ring 340 to uniformly contact the insulating liquid 120, effectively cooling the stator 200.

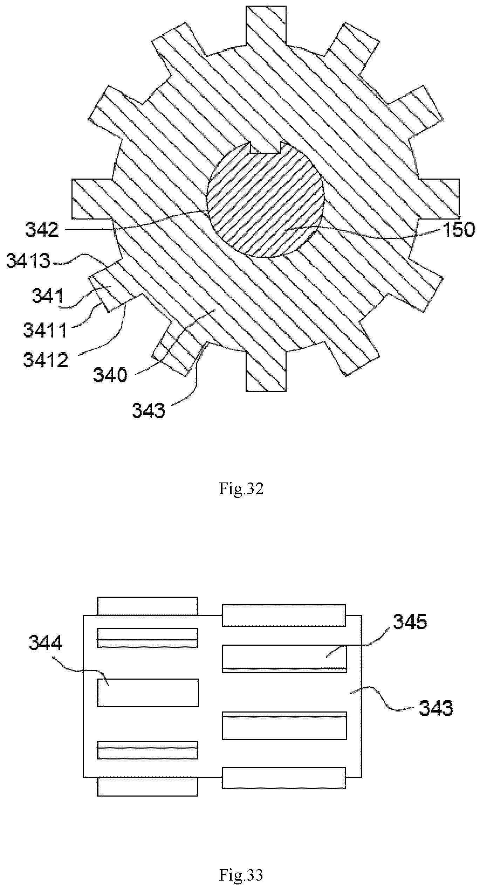

In particular, in some embodiments, the angle formed by adjacent two protrusions 341 to the axis center of the second rotating ring 340 is 30° to 120°. As shown in Fig. 31, on the cross-section of the second rotating ring 340 shown in Fig. 27, each protrusion 341 is considered as a point on the second outer peripheral surface 343, and the line connecting the center of the shaft 500 with each adjacent protrusion 341 can form an angle of 30° to 120°. As shown in Fig. 32, there are 12 protrusions 341, so the angle formed by each adjacent pair of protrusions 341 to the center of the second rotating ring 340 is 30°. In other embodiments, there are 3 protrusions 341, so the angle formed by each adjacent pair of protrusions 341 to the center of the second rotating ring 340 is 120°. With 6 protrusions 341, the angle formed by each adjacent pair of protrusions 341 to the center of the second rotating ring 340 is 60°. In other words, the number of protrusions 341 arranged in the circumferential direction of the second rotating ring 340 can be 3 to 12, so that multiple protrusions 341 can effectively agitate the insulating liquid 120 continuously and throw the insulating liquid 120 onto the inner surface of the stator 200 around the second rotating ring 340.

Of course, in other embodiments, please refer to Fig. 33, which is generally similar to the embodiment shown in Fig. 31. The difference is that multiple first protrusions 344 and multiple second protrusions 345 are provided on the second outer peripheral surface 343, and the multiple first protrusions 344 and multiple second protrusions 345 are arranged in the circumferential direction of the second rotating ring 340, and the first protrusions 344 and the second protrusions 345 are staggered and spaced apart along the axial direction of the second rotating ring 340.

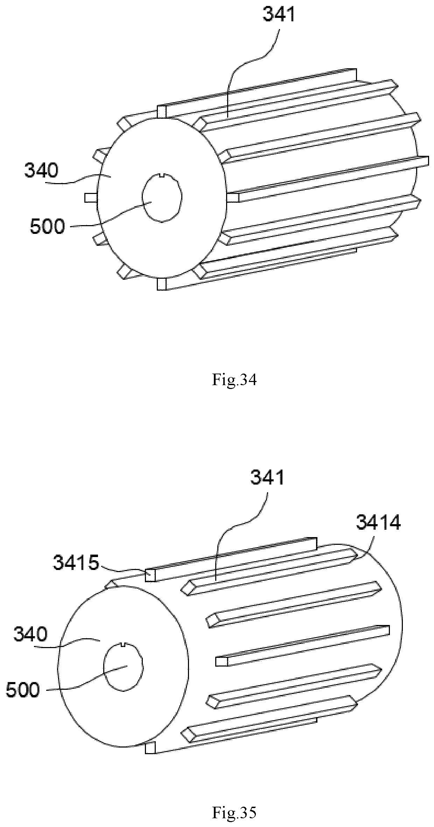

In some embodiments, as shown in Fig. 34, the protrusion 341 extends from one end of the second rotating ring 340 to the other end of the second rotating ring 340. In particular, the protrusion 341 extends along the axis direction of the parallel rotor 400, that is, the length of the protrusion 341 increases, so that the areas of the side surfaces 3412 and 3413 of the first and second protrusions increase, that is, the amount of insulating liquid 120 that can be agitated by the side surfaces 3412 and 3413 of the first and second protrusions increases, so that the weight of the insulating liquid 120 thrown off by the second rotating ring 340 per unit time increases, thereby improving the cooling and cooling efficiency of the stator 200.

In other embodiments, as shown in fig. 35, the protrusion 341 has a first end surface of protrusion 3414 near the rotor 400 and a second end surface of protrusion 3415 away from the rotor 400. There is a gap between the first end surface of protrusion 3414 and the end face of the second rotating ring 340 near the rotor 400, and a gap between the second end surface of protrusion 3415 and the end face of the second rotating ring 340 away from the rotor 400. By having a gap between the protrusion 341 and the two end faces of the first rotating ring 330, the resistance encountered by the protrusion 341 when agitating the insulating liquid 120 is reduced, thereby reducing the kinetic energy loss of agitating the insulating liquid 120.

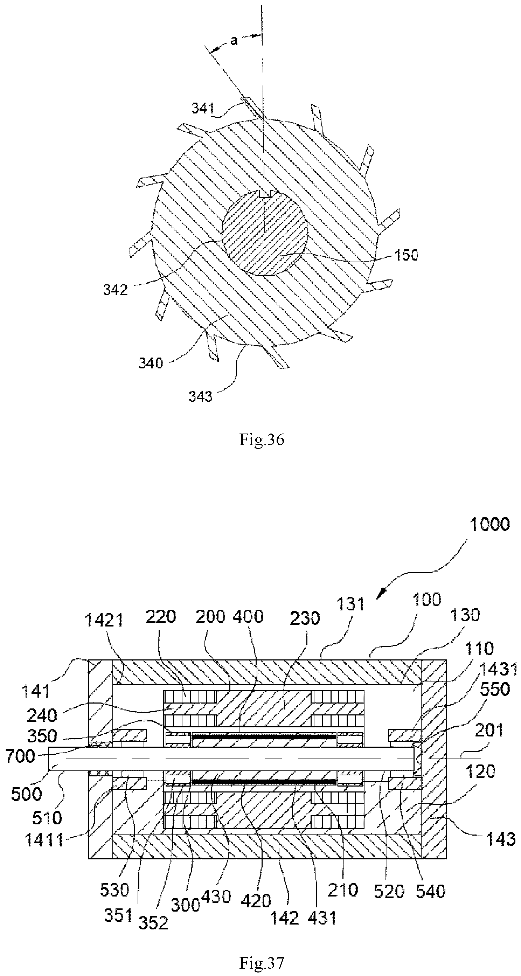

In some embodiments, please refer to fig. 36, combined with the schematic of Fig. 30 for explanation, the direction from the bottom to the top of the protrusion 341 forms a preset angle a with the direction from the axis of the second rotating ring 340 to the bottom of the protrusion 341. The bottom of the protrusion 341, the top of the protrusion 341, and the axis of the second rotating ring 340 are all considered as single points on the cross-section shown in Fig. 32. Connect the bottom and top of the protrusion 341, and connect the bottom of the protrusion 341 to the axis of the second rotating ring 340, the two lines can form a preset angle a. By trimming from the bottom of the protrusion 341 to the top of the protrusion 341 relative to the direction from the bottom of the protrusion 341 to the axis of the second rotating ring 340, the space between one side of the protrusion 341 and the second outer peripheral surface 343 can be narrower. When the rotor 400 drives the second rotating ring 340 to rotate towards the inclined direction of the protrusion 341, more insulation liquid 120 can be brought up in the narrow space between the protrusion 341 and the second outer peripheral surface 343, so that the weight of the insulation liquid 120 thrown off by the second rotating ring 340 per unit time increases, that is, when the second rotating ring 340 rotates in the first direction, the cooling efficiency of the stator 200 is improved. When it can be understood, rotating the rotor 400 in the first direction (counterclockwise direction in Fig. 32) is defined as the common operating state of the motor 1000, which can ensure that the motor 1000 effectively cools the stator 200 and ensures the operating efficiency of the motor 1000. Since the motor 1000 of the present application embodiment is applied to the watercraft propeller 2000, rotating the rotor 400 of the motor 1000 in the first direction can drive the propeller 2100 to rotate in the first direction, thereby propelling the watercraft 3000 forward, to ensure effective cooling of the motor 1000 and improve operating efficiency while propelling the watercraft 3000 forward.

In some embodiments, the preset angle a between the line connecting the bottom and top ends of the protrusion 341 and the line connecting the bottom of the protrusion 341 and the axis of the second rotating ring 340 is 0° to 60°. It can be understood that the limit state of the inclined side of protrusion 341 is when the line connecting the top and bottom of the protrusion 341 forms a preset angle a of 60° with the line connecting the bottom of the protrusion 341 and the axis of the second rotating ring 340. When the preset angle a is greater than 60°, the reduced weight of the insulating liquid 120 carried by the narrow space between the second outer peripheral surface 343 of the protrusion 341 results in a reduced weight of the insulating liquid 120 thrown off by the second rotating ring 340 per unit time, which cannot meet the cooling requirements.

In other embodiments, please refer to Fig. 37, the agitation structure 300 is provided with a third rotating ring 350, the peripheral side of the third rotating ring 350 is provided with an inner cavity 351 and a transverse hole 352 communicating with the inner cavity 351, the transverse hole 352 is set away from the opening of the inner cavity 351 on the outer peripheral surface of the third rotating ring 350, and the inner surface of the inner cavity 351 and the inner surface of the transverse hole 352 are used to agitate the insulating liquid 120. During the rotation process in the third rotating ring at 350, when the restraining force of the inner surface of the inner cavity 351 on the insulating liquid 120 is insufficient to balance the centrifugal force of the insulating liquid 120, the insulating liquid 120 passes through and is thrown around the third rotating ring 350, eventually being thrown onto the inner peripheral surface of the stator 200 around the third rotating ring 350, effectively cooling and lowering the temperature of the stator 200.

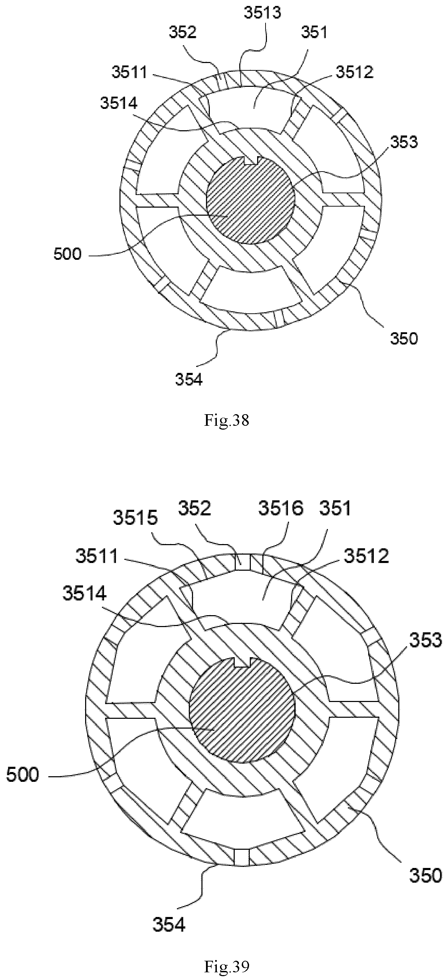

For specific details, please also refer to Fig. 37 and 38. The third rotating ring 350 is provided with a third mating hole 353, and the inner surface of the third mating hole 353 is fixedly matched with the outer peripheral side surface of the shaft 500, thereby fixing the third rotating ring 350 to the shaft 500. The third rotating ring 350 can rotate around the axis of the shaft 500. The axis of the third rotating ring 350 is coaxially aligned with the axis of the rotor 500. There is a gap between one end of the third rotating ring 350 and one end of the rotor 400. In some embodiments, the inner surface of the third mating hole 353 is provided with a fixed key, and the outer peripheral side surface of the rotor 500 is provided with a keyway that cooperates with the fixed key, thereby restricting the synchronous rotation of the third rotating ring 350 and the rotor 500. Of course, in other embodiments, the inner surface of the third mating hole 353 can be provided with a keyway, and the outer peripheral side surface of the rotor 500 can be provided with a fixed key that cooperates with the keyway. In the present embodiment, the fixed mating form between the inner surface of the third mating hole 353 and the outer peripheral side surface of the rotor 500 is not limited to the above-mentioned manner. The third rotating ring 350 has a third outer peripheral surface 354, and a transverse hole 352 extends from the third outer peripheral surface 354 towards the axis of the third rotating ring 350. The inner cavity 351 is located between the inner surface of the third mating hole 353 and the third outer peripheral surface 354. The inner cavity 351 is isolated from the third mating hole 353 to ensure that the third rotating ring 350 is effectively fixed on the shaft 500 and to prevent the third rotating ring 350 from shaking. The opening of the transverse hole 352 away from the third outer peripheral surface 354 is located on the inner surface of the inner cavity 351 near the third outer peripheral surface 354. When the third rotating ring 350 rotates, the insulating liquid 120 in the inner cavity 351 will gather near the inner surface of the inner cavity 351 under the centrifugal effect, and when the centrifugal force of the insulating liquid 120 is unbalanced with the constraint force of the inner cavity 351, the insulating liquid 120 flows out through the transverse hole 352 and is thrown out around the third rotating ring 350. When understood, the volume of the inner cavity 351 is significantly larger than the volume of the transverse hole 352, allowing the inner cavity 351 to contain enough insulating liquid 120 so that there is enough insulating liquid 120 for the third rotating ring 350 to throw off.

Furthermore, the third rotating ring 350 is provided with multiple cavities 351 and multiple transverse holes 352, with multiple cavities 351 spaced along the circumference of the third rotating ring 350, each inner cavity 351 communicating with at least one transverse hole 352.

In this embodiment, each inner cavity 351 corresponds to a transverse hole 352, so that the insulating liquid 120 in each inner cavity 351 can only flow out from the corresponding transverse hole 352. Of course, in other embodiments, each inner cavity 351 can also correspond to and communicate with two or more transverse holes 352, that is, the insulating liquid 120 in each inner cavity 351 can flow out of the inner cavity 351 through two or more transverse holes 352. The spacing between the two adjacent inner cavities 351 is evenly set between the two inner surfaces that are close to each other, that is, multiple inner cavities 351 are uniformly arranged along the circumferential direction of the third rotating ring 350, so that the insulating liquid 120 splashed by the third rotating ring 350 is evenly dispersed around.

Furthermore, as shown in Fig. 38, the adjacent two inner cavities 351 are separated by partitions, and the partitions extend radially along the third rotating ring 350.

In particular, each inner cavity 351 has a first inner side surface 3511 and a second inner side surface 3512 opposite the first inner side surface 3511. The first inner side surface 3511 and the second inner side surface 3512 are both parallel to the radial direction of the third rotating ring 350. A baffle is formed between the first inner side surface 3511 of one inner cavity 351 and the second inner side surface 3512 of an adjacent inner cavity 351, so that the baffle extends radially along the third rotating ring 350. Because the inner cavities 351 are independent of each other, it ensures that the inner cavities 351 do not interfere with each other, allowing the weight of the insulating liquid 120 thrown off by each inner cavity 351 to be roughly the same, in order to uniformly cool and lower the temperature of the inner surface of the stator 200. Of course, in other embodiments, it is also possible to set a connecting hole on a first inner side 3511 of an inner cavity 351 facing an adjacent second inner side 3512 of an inner cavity 351, so that during the rotation process of the third rotating ring 350, the insulating liquid 120 can flow from one inner cavity 351 to another inner cavity 351, thereby reducing flow resistance and reducing kinetic energy loss.

Furthermore, please refer to Fig. 38 for details. The inner cavity 351 has an arc inner surface 3513 away from the axis of the third rotating ring 350, the arc inner surface 3513 is parallel to the outer peripheral surface of the third rotating ring 350, and the distance from the arc inner surface 3513 to the outer peripheral surface of the third rotating ring 350 is greater than the thickness of the partition.

In this embodiment, the inner cavity 351 also has an arc bottom surface 3514 near the axis of the third rotating ring 350. The arc bottom surface 3514 is parallel to the arc inner surface 3513. The transverse hole 352 extends from the third outer peripheral surface 354 to the arc inner surface 3513. The distance from the arc bottom surface 3514 to the arc inner surface 3513 is greater than the depth of the transverse hole 352, to ensure that the inner cavity 351 shell can accommodate enough insulation liquid 120, reduce the weight of the third rotating ring 350, and reduce kinetic energy loss. By utilizing the distance from the arc inner surface 3513 to the third outer peripheral surface 354 greater than the thickness of the partition, the unit weight of insulation liquid 120 thrown off by the third rotating ring 350 per unit time is increased, improving cooling efficiency.

In other embodiments, please refer to Fig. 39, which is generally similar to Fig. 38, except that the inner cavity 351 has a first top inner surface 3515 that is far from the axis of the third rotating ring 350 and a second top inner surface 3516 that forms an angle with the first top inner surface 3515. The transverse hole 352 connecting the inner cavity 351 is located at the opening where the first top inner surface 3515 and the second top inner surface 3516 are connected. The first top inner surface 3515 and the second top inner surface 3516 form a funnel shape, so that when the third rotating ring 350 throws off the insulating liquid 120, the constraint force of the first top inner surface 3515 and the second top inner surface 3516 on the insulating liquid 120 is reduced, allowing the insulating liquid 120 to flow out of the cavity 110 quickly, thereby improving the cooling and cooling efficiency.

Furthermore, in the embodiment of Fig. 38, please also refer to Fig. 37 and Fig. 38 together. The third rotating ring 350 is provided with multiple rows of transverse holes 352, and each row of transverse holes 352 is arranged along the axis direction of the parallel third rotating ring 350.

In this embodiment, each row of transverse holes 352 corresponds to each communicating with each inner cavity 351. By arranging each row of transverse holes 352 along the axis direction of the parallel third rotating ring 350, the rate at which the insulating liquid 120 in each inner cavity 351 flows out from multiple transversely arranged transverse holes 352 is consistent, thereby ensuring that the insulating liquid 120 shed from each inner cavity 351 is evenly distributed. In particular, each row of transverse holes 352 is composed of two transverse holes 352 arranged side by side. Of course, in other embodiments, each row of transverse holes 352 can also be composed of three or more transverse holes 352. Each row of transverse holes 352 can also be arranged along a curve, so that multiple rows of transverse holes 352 form a spiral curve.

Furthermore, please refer to Fig. 38 for details, the transverse holes 352 are set close to the inner surface of the inner cavity 351. In particular, the transverse holes 352 are close to the first inner side surface 3511. When the third rotating ring 350 rotates in the first direction (counterclockwise direction in Fig. 38), the first direction is from the second inner side surface 3512 to the first inner side surface 3511. In other words, the distance from the center of transverse holes 352 to the first inner side 3511 is less than the distance from the center of transverse holes 352 to the second inner side surface 3512. When each inner cavity 351 is connected to a row of transverse holes 352, the row of transverse holes 352 are all positioned close to the first inner side surface 3511. When the third rotating ring 350 rotates in the first direction, the weight of the thrown insulating liquid 120 is greater than the weight of the thrown insulating liquid 120 when the third rotating ring 350 rotates in the other direction, to ensure the cooling efficiency of the motor 1000 in normal operating conditions.

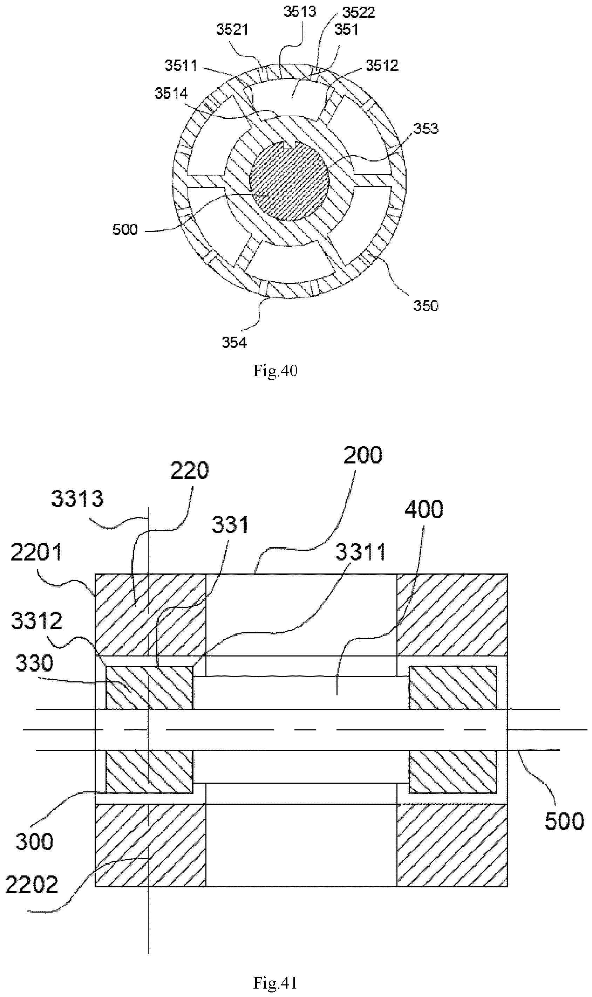

In other embodiments, as shown in Fig. 40, each inner cavity 351 is connected to the first transverse hole 3521 and the second transverse hole 3522. The first transverse hole 3521 is close to the first inner side surface 3511, and the second transverse hole 3522 is close to the second inner side surface 3512. If both the first transverse hole 3521 and the second transverse hole 3522 are considered circular, the centerline of the first transverse hole 3521 is a line equidistant from the inner surface circumference of the first transverse hole 3521, and the centerline of the second transverse hole 3522 is a line equidistant from the inner surface circumference of the second transverse hole 3522. The distance from the centerline of the first transverse hole 3521 to the inner side surface 3511 is equal to the distance from the center of the second transverse hole 3522 to the inner side surface 3512, so that no matter which direction the third rotating ring 350 rotates, the weight of the insulating liquid 120 thrown off by the inner cavity 351 is roughly the same, allowing the motor 1000 to handle more scenarios.

Furthermore, in some embodiments, please refer to Fig. 37 for further details, where transverse hole 352 extends radially along the third rotating ring 350. In particular, the resistance of the insulating liquid 120 flowing out of transverse hole 352 into inner cavity 351 is reduced, ensuring that the insulating liquid 120 can smoothly flow out of transverse hole 352 into inner cavity 351. This guarantees that the weight of the insulating liquid 120 thrown off by the third rotating ring 350 in a unit time is ensured, thereby ensuring the cooling efficiency of motor 1000.

Furthermore, in some embodiments, the diameter of transverse hole 352 is proportional to the volume of inner cavity 351, meaning that as the volume of inner cavity 351 increases, the diameter of transverse hole 352 will also increase. The diameter of transverse hole 352 is proportional to the volume of inner cavity 351, which can ensure that hole 352 effectively removes insulating liquid 120 from inner cavity 351 to ensure that the weight of insulating liquid 120 thrown off by the third rotating ring 350 in unit time is sufficient to meet the requirements.

Furthermore, in some embodiments, the end of the third rotating ring 350 is provided with an opening communicating with the inner cavity 351, the opening being used to introduce the insulating liquid 120 into the inner cavity 351.

In this embodiment, openings are provided on both ends of the third rotating ring 350 near and away from the rotor 400. In particular, the first inner side surface 3511, the second inner side surface 3512, the arc bottom surface 3514, and the arc inner surface 3513 all extend to the end face of the third rotating ring 350, thereby forming openings communicating with the inner cavity 351 on two opposite end faces of the third rotating ring 350. The horizontal setting of the axis of rotor 400, with rotor 400 in a stationary state, ensures that the distance from the inner surface 3513 to the shaft 500 is greater than the distance from the upper surface of insulating liquid 120 to the shaft 500, thereby ensuring that at least a portion of the inner surface 3513 is submerged in the insulating liquid 120. This allows the insulating liquid 120 to easily enter the inner cavity 351 through the opening, ensuring that the inner cavity 351 can obtain a sufficient amount of insulating liquid 120, thereby ensuring that the third rotating ring 350, when rotating, can shed a sufficient amount of the weight of the insulating liquid 120 in a unit time. Of course, in other embodiments, the third rotating ring 350 can also have an opening that communicates with the inner cavity 351 only at one end near the rotor 400, or only at one end away from the rotor 400.

The agitation structure 300 of the present embodiment is not limited to the illustrated embodiment. Any structure intended to agitate the insulating liquid 120 in a centrifugal motion to shake off the inner peripheral surface of the stator 200 is considered an embodiment of the agitation structure 300 of the present application.

Furthermore, in the embodiment shown in Fig. 21, the side of the agitation structure 300 faces the end of the stator 200. Since the stator 200 end is equipped with winding coil 220, a large amount of insulating liquid 120 shaken off by the agitation structure 300 comes into contact with the winding coil 220, allowing the temperature of the winding coil 220 to decrease rapidly. This selectively cools the winding coil 220 at the end of the stator 200, thereby improving the operational efficiency of the motor 1000. It can be understood that the agitation structure 300 can be combined with the end of the stator 200 on the periphery of the week side of the structure 300, as listed in the various embodiments mentioned above, and is not limited to the embodiments illustrated.

Please refer to Fig. 41 and explain in conjunction with the embodiment shown in Fig. 26. The first outer peripheral surface 331 of the first rotating ring 330 has a first edge 3311 close to the rotor 400 and a second edge 3312 away from the rotor 400. For ease of understanding, a virtual centerline 3313 is set between the first edge 3311 and the second edge 3312. The centerline 3313 is equidistant from the first edge 3311 and the second edge 3312. The winding coil 220 has a winding end face 2201 away from the rotor 400. For ease of understanding, a virtual end center surface 2202 is set between the winding end face 2201 and the rotor 400 end face, which is a plane equidistant from the winding end face 2201 and the rotor 400 end face. The outer side of the agitation structure 300 is aligned with the end of the stator 200, which can be understood as the center line 3313 of the first rotating ring 330 being located on the middle surface of the end of the stator 200. In other words, the insulation liquid 120 thrown off by the outer side of the first rotating ring 330 can uniformly contact the winding coil 220, thereby ensuring the maximization of the cooling efficiency of the winding coil 220.

Furthermore, in any one of the embodiments from Fig. 9 to Fig. 41, when the agitation structure 300 rotates in the first direction (counterclockwise direction in Fig. 36), it agitate the first weight of insulation liquid 120, and when the agitation structure 300 rotates in the second direction (clockwise direction in Fig. 36), it agitate the second weight of insulation liquid 120, with the first direction being opposite to the second direction and the first weight being greater than the second weight. It can be understood that when the rotor 400 rotates in the first direction, the motor 1000 outputs the power to drive the watercraft 3000 forward. At this time, the agitation structure 300 throws off a larger amount of insulating liquid 120 per unit time to cool down the motor 1000 to cope with the high heat generated when driving the watercraft 3000 forward. When the rotor 400 rotates in the second direction, the motor 1000 outputs the power to drive the watercraft 3000 backward. At this time, the agitation structure 300 throws off a smaller amount of insulating liquid 120 per unit time to cool down the motor 1000 to cope with the low heat generated when driving the watercraft 3000 backward. In other words, the weight of the insulating liquid 120 thrown off by the agitation structure 300 is greater in the first scenario than in the second scenario, in order to provide different cooling rates for the motor 1000 in driving the watercraft 3000 forward or backward, to ensure the optimal operation efficiency of the motor 1000. It is not necessary to throw off a large amount of insulating liquid 120 to cool it down when the motor 1000 is operating at low heat, in order to prevent wasting the kinetic energy of the insulating liquid 120. It can be understood that the above limitation of the first weight being greater than the second weight can be combined with various embodiments listed above, and is not limited to the explanation of the illustrated embodiments.

In particular, as In particular described in the embodiment shown in Fig. 36, since the protrusion 341 of the second rotating ring 340 can tilt towards one side, the weight of the insulating liquid 120 carried by one side of the protrusion 341 is different from the weight carried by the other side. When the protrusion 341 tilts in the first direction, the angle at which the protrusion 341 grips the insulating liquid 120 on the second outer peripheral surface 343 of the second rotating ring 340 is greater, so the protrusion 341 can agitate and throw off more weight of the insulating liquid 120 on the side tilted in the first direction. Therefore, when the second rotating ring 340 rotates in the first direction, the weight of the insulating liquid 120 agitated and thrown off by the protrusion 341 is greater, while when the second rotating ring 340 rotates in the second direction, the weight of the insulating liquid 120 agitated and thrown off by the protrusion 341 is smaller.

Furthermore, in any one of the embodiments in figures 10 to 41, when the rotor 400 rotates in the first direction, it has a first operating frequency, and when the rotor 400 rotates in the second direction, it has a second operating frequency, with the first operating frequency being greater than the second operating frequency.

In this embodiment, as illustrated in the embodiment of Fig. 36, when the rotor 400 rotates in the first direction, that is, the motor 1000 outputs power to drive the watercraft 3000 forward, the rotor 400 operates at the first operating frequency with a faster rotational speed. When the rotor 400 rotates in the second direction, that is, the motor 1000 outputs power to drive the watercraft 3000 backward, the rotor 400 operates at the second operating frequency with a slower rotational speed. When the motor 1000 controls the rotor 400 to rotate in the first direction, the rotor 400 spins faster, the stator 200 generates more heat. When the motor 1000 controls the rotor 400 to rotate in the second direction, the rotor 400 spins slower, the stator 200 generates less heat, so using the first weight greater than the second weight can effectively save energy. It can be understood that the above limitation of the first operating frequency being greater than the second operating frequency can be combined with the various embodiments listed above, and is not limited to the explanation of the illustrated embodiments.

Furthermore, in any one of the embodiments from Fig. 10 to Fig. 41, the agitation structure 300 is provided with a balance plate 360 adjacent to the rotor 400, and the balance plate 360 limits the end of the rotor 400.

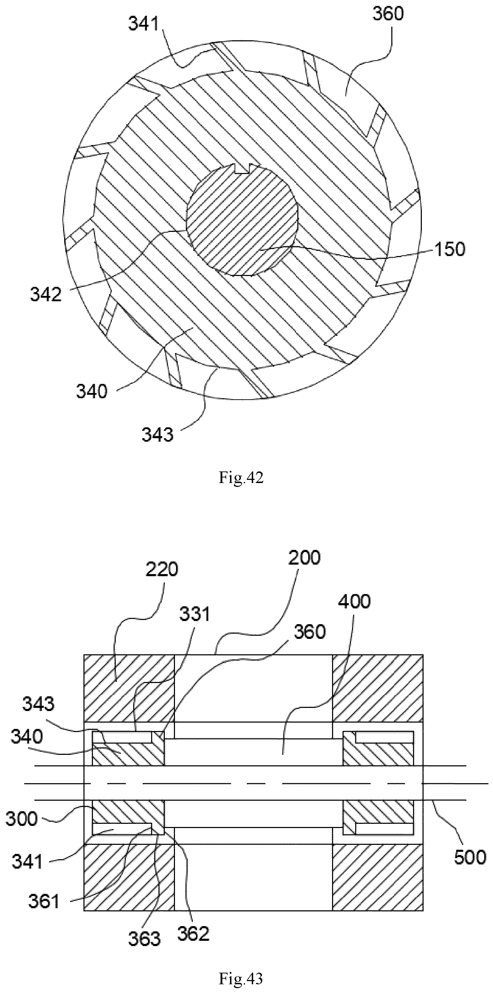

In this embodiment, it is In particular illustrated with reference to Figs. 42 and 43. In the embodiment of fig. 36, the balance plate 360 is set on the second outer peripheral surface 343, the balance plate 360 has a first outer side surface 361 and a second outer side surface 362 opposite to the first outer side surface 361, and has an outer end surface 363 connected between the first outer side surface 361 and the second outer side surface 362. The first outer side surface 361 is flush with the end face of the second rotating ring 340 near the rotor 400. Thus, the first outer side surface 361 and the end face of the second rotating ring 340 near the rotor 400 jointly limit the rotor 400. In particular, the motor 1000 is provided with two second rotating rings 340, each of the two second rotating rings 340 is set at each end of the rotor 400. Two balance plates 360 jointly clamp rotor 400 with the second rotating ring 340 to prevent rotor 400 from moving axially along shaft 500. The outer end face 363 to the axis of the second rotating ring 340 is greater than the outer diameter of rotor 400, so that the first outer side surface 361 and the second rotating ring 340 can effectively cover the end face of rotor 400, ensuring that balance plate 360 effectively maintains the balance rotation of rotor 400. More In particular, in order to ensure the structural strength of the third rotating ring 350, multiple protrusions 341 are connected to balance plate 360 to prevent the insulation liquid 120 agitated by protrusions 341 from spreading at one end of the second rotating ring 340 near the rotor 400, allowing the insulation liquid 120 thrown off by the second rotating ring 340 to effectively concentrate at the end of stator 200, effectively cooling the end of stator 200. It is understood that the limitation of the balancing plate 360 near the rotor 400 set for the agitation structure 300 can be combined with the various embodiments listed above, and is not limited to the explanation of the illustrated embodiments.

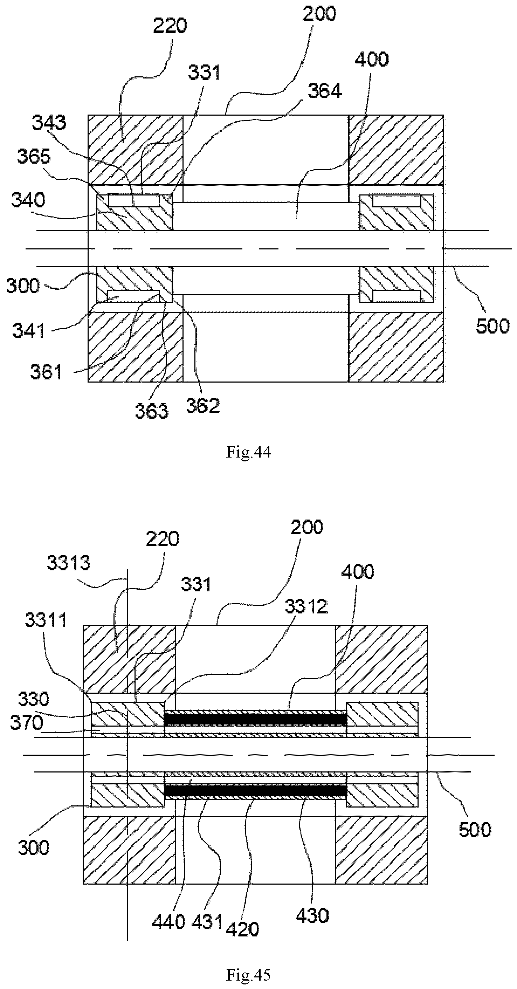

In other embodiments, as shown in Fig. 44, the second rotating ring 340 is provided with a first balancing plate 364 and a second balancing plate 365, the first balancing plate 364 is set at one end of the second rotating ring 340 near the rotor 400, and the second balancing plate 365 is set at the other end of the second rotating ring 340 away from the rotor 400. The second balancing plate 365 can block the insulation liquid 120 agitated by the second rotating ring 340 from spreading in the axial direction of the shaft 500 towards the direction away from the stator 200 and rotor 400, to ensure effective cooling of the stator 200 and rotor 400.

Furthermore, in any of the embodiments from Fig. 10 to Fig. 44, as shown in Fig. 45, the rotor 400 is provided with lightening holes 440, the agitation structure 300 is provided with drainage holes 370 connected to the lightening holes 440, and the drainage holes 370 are used to guide the insulating liquid 120 into the lightening holes 440.

The lightening holes 440 are set on the rotor bracket 430, isolated from the slots 431, to ensure that the magnetic member 420 is effectively secured to the rotor bracket 430. In particular, multiple lightening holes 440 can be set on the rotor bracket 430, and the multiple lightening holes 440 are evenly distributed around the axial direction of the rotor bracket 430. Multiple slots 431 can be set on the periphery of the rotor bracket 430, while multiple lightening holes 440 can be located close to the axis of the rotor 400, to reduce the distance between the magnetic member 420 of the rotor 400 and the stator 200, making it easier for the magnetic member 420 of the rotor 400 to electromagnetically cooperate with the winding coil 220 of the stator 200, and increase the torque of the rotor 400. The drainage hole 370 extends from the end face of the second rotating ring 340 away from the rotor 400 to the end face near the rotor 400. Due to the contact between the second rotating ring 340 and the rotor bracket 430, the drainage hole 370 can be docked with the weight reduction hole 440. During the rotation of the second rotating ring 340, the insulating liquid 120 can flow into the drainage hole 370 and enter the weight reduction hole 440 through the drainage hole 370, so that the insulating liquid 120 can effectively cool the rotor bracket 430. The rotor bracket 430 is made of steel with high thermal conductivity, so that the heat generated by the magnetic components 420 of the rotor 400 can be effectively dissipated through the rotor bracket 430 and the insulating liquid 120, achieving mutual heat dissipation for the stator 200 and the rotor 400. It can be understood that the above-mentioned rotor 400 is provided with a weight reduction hole 440, and the agitation structure 300 is provided with a limiting of a drainage hole 370 connected to the weight reduction hole 440, which can be combined with various embodiments listed above, and is not limited to the explanation of the illustrated embodiments.

Furthermore, in any one of the embodiments in figures 1 to 45, the weight of the insulating liquid 120 is inversely proportional to the operating frequency of the agitation structure 300. That is, the filling amount of the insulating liquid 120 in the cavity 110 is inversely proportional to the speed of the agitation structure 300 when the motor 1000 is operating. In other words, if the speed of the agitation structure 300 is higher when the motor 1000 is operating, the filling amount of the insulating liquid 120 in the cavity 110 can be smaller. In the case of a higher rated speed of the motor 1000, filling less insulating liquid 120 in the cavity 110 can meet the cooling requirements, roughly setting the volume of the insulating liquid 120 to be roughly 30% of the volume of the cavity 110. It can be understood that the above-mentioned limitation that the weight of insulating liquid 120 is inversely proportional to the operating frequency of agitation structure 300 can be combined with various embodiments listed above, and is not limited to the explanation of the illustrated embodiments.

Furthermore, in any one of the embodiments in figures 1 to 45, the volume of insulating liquid 120 accounts for 30% to 50% of the volume of the cavity 110. It can be understood that the cooling efficiency of the insulating cavity 110 to the inner peripheral surface of the stator 200 by centrifugal motion is better than the cooling efficiency of the insulating liquid 120 in contact with the inner peripheral surface of the stator 200 by rotational motion, that is, the cooling efficiency of the insulating liquid 120 not filling the cavity 110 to the stator 200 is greater than the cooling efficiency of the insulating liquid 120 filling the cavity 110 to the stator 200. When the insulating liquid 120 is not filled in the cavity 110, choosing a volume ratio of 30%~50% between the insulating liquid 120 and the cavity 110 can optimize the agitation structure 300 to reduce agitating loss and improve the cooling efficiency of the insulating liquid 120.

Furthermore, in any one of the embodiments in figures 1 to 45, the housing 100 outside the cavity 110 is used to contact the heat dissipation medium, and the housing 100 transfers the heat of the insulating liquid 120 to the heat dissipation medium. By contacting the housing 100 with the heat dissipation medium, the heat dissipation medium can take away the heat from the housing 100, and the housing 100 absorbs the temperature of the stator 200 through the insulating liquid 120, effectively dissipating heat from the stator 200 and other internal components of the motor 1000, achieving overall effective heat dissipation for the motor 1000.

In some embodiments, the cooling medium can be water. When motor 1000 is in use, motor 1000 is placed in a flowing water environment, with the outer surface 131 of housing 100 in contact with the cooling medium, i.e. The outer surface 131 of housing 100 is in contact with water. When the housing 100 absorbs the internal heat of housing 100 through insulating liquid 120, the external water then absorbs the heat from housing 100, thus achieving overall cooling of motor 1000.

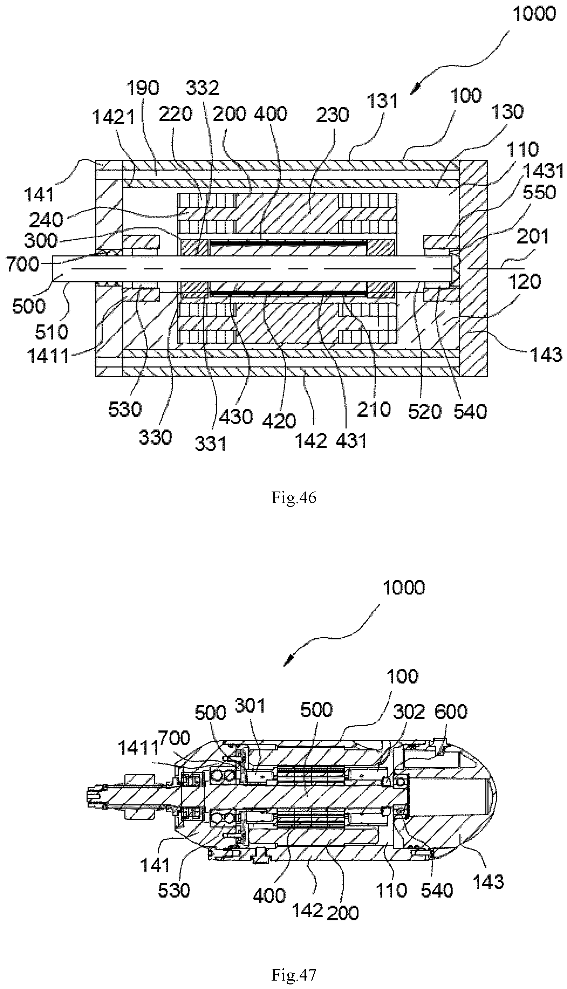

In other embodiments, please refer to Fig. 46, cooling channels 190 are set between the outer surface 131 of housing 100 and the cavity 110. The cooling medium flows into the cooling channels 190, and an external cooling channel that connects to the cooling channels 190 can also be set outside motor 1000. The insulation liquid 120 in the housing 100 absorbs the heat inside the housing 100, and the cooling medium entering the cooling channels 190 further absorbs the heat of the housing 100. After absorbing the heat of the motor 1000, the cooling medium is taken away through the external cooling channels 190, thereby allowing the overall cooling of the motor 1000.

It is understood that in the embodiments of the present application, the cooling medium based on the housing 100 is not limited to water, and the cooling medium can also be air, nitrogen, oil, or any other heat-conducting medium.

Furthermore, please refer to Fig. 47. In order to effectively cool different areas of the motor 1000, the area near the first end cover 141 inside the cavity 110 is defined as the front cavity, and the area near the second end cover 143 inside the cavity 110 is defined as the rear cavity. In order to differentiate the cooling efficiency of the front chamber from the cooling efficiency of the rear chamber, a first agitation structure 301 is set at one end of the rotor 400 near the first end cover 141, and a second agitation structure 302 is set at one end of the rotor 400 near the second end cover 143. The first agitation structure 301 and the second agitation structure 302 can be different, so that the first agitation structure 301 and the second agitation structure 302 cool the front chamber and the rear chamber respectively, with different cooling efficiencies. For example, the axial length of the shaft 500 of the first agitation structure 301 is different from the axial length of the shaft 500 of the second agitation structure 302, and the outer diameter of the first agitation structure 301 is different from the outer diameter of the second agitation structure 302.

In the present embodiment, in order to effectively fix the first agitation structure 301 and the second agitation structure 302 on the shaft 500, the motor 1000 also includes a first fixing sleeve 500 and a second fixing sleeve 600. The first fixing sleeve 500 and the second fixing sleeve 600 are both fixed on the shaft 500 in a spiral connection manner, and the first fixing sleeve 500 locks the first agitation structure 301 near one end of the rotor 400 close to the first end cover 141, and the second fixing sleeve 600 locks the second agitation structure 302 near one end of the rotor 400 close to the second end cover 143. Of course, in other embodiments, the first agitation structure 301 and the second agitation structure 302 can also be fixed at the two ends of the rotor 400 in other ways.

In the present embodiment, the motor 1000 also includes a seal 700. The seal 700 is roughly u-shaped, fixed on the first bearing bracket 1411, and located between the first agitation structure 301 and the first bearing 530 to prevent the first bearing 530 from detaching from the first bearing bracket 1411 and impacting the first agitation structure 301. Of course, in other embodiments, the motor 1000 can also be equipped with two seals 700. The two seals 700 are respectively fixed on the first bearing bracket 1411 and the second bearing bracket 1431, to resist the first bearing 530 and the second bearing 540 respectively.

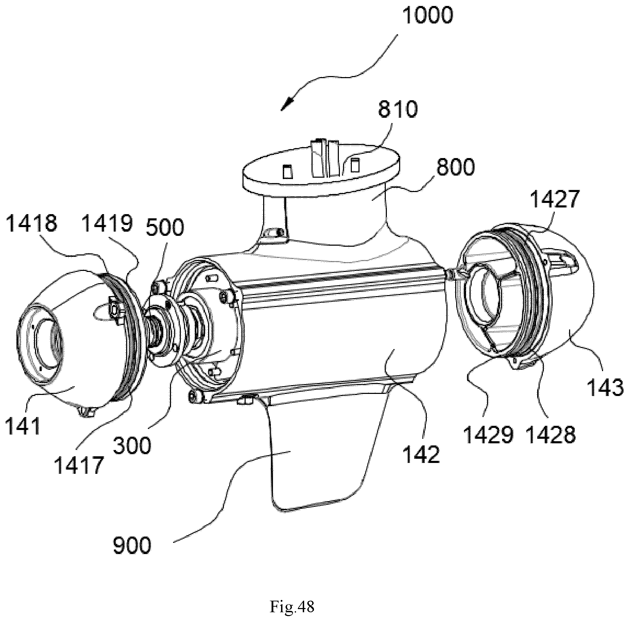

In the present embodiment, as shown in Fig. 48, the first end cover 141 is provided with a first connecting plate 1419 extending into the side shell 142, and the second end cover 143 is provided with a second connecting plate 1429 extending into the side shell 142. The first connecting plate 1419 is fixed to the side shell 142, and the fixing method is not limited. Any method intended to make the first connecting plate 1419 stable with the side shell 142 can be used as an embodiment of the present application. The second connecting plate 1429 is fixed to the side shell 142, and the fixing method is also not limited. Any method intended to make the second connecting plate 1429 stable with the side shell 142 can be used as an embodiment of the present application. The first connecting plate 1419 is provided with at least one first sealing groove 1418, and the second connecting plate 1429 is provided with at least one second sealing groove 1428. Furthermore, a first rubber ring 1417 and a second rubber ring 1427 are respectively provided in the first sealing groove 1418 and the second sealing groove 1428, and the first rubber ring 1417 and the second rubber ring 1427 are both in effective contact with the inner surface of the side shell 142 to achieve the sealing connection between the first end cover 141 and the side shell 142, and between the second end cover 143 and the side shell 142.

Furthermore, in this embodiment, as shown in Fig. 48, the motor 1000 is a type of underwater operating motor, and the outer surfaces 131 of the first end cover 141 and the second end cover 143 are both conical in shape to reduce the external water flow resistance of the motor 1000. In order to ensure the stability of the motor 1000 underwater, a stabilizing plate 900 is provided on one side of the side shell 142. In the schematic shown, the motor 1000 is in normal working condition underwater, with the stabilizing plate 900 extending vertically downwards to reduce the shaking of the motor 1000 and ensure stable movement underwater.

In this embodiment, the motor 1000 also includes a support tube 800 fixed to the side shell 142, with a wire cavity 810 inside the support tube 800. The side shell 142 has a wire opening at the connection of the support, and the wires of the stator 200 winding coil 220 inside the side shell 142 extend out of the side shell 142 through the wire opening. When the supporting tube 800 is fixed to the side shell 142, the wires of the motor 1000 extend into the wire cavity 810. The supporting tube 800 is sealed to the side shell 142 to prevent external media from entering the cavity 110 of the motor housing 100. The supporting tube 800 effectively supports and stabilizes the side shell 142, allowing the motor 1000 to operate stably underwater.

In this embodiment, the motor 1000 also includes an installation flange 810 set at one end of the supporting tube 800 away from the side shell 142, the installation flange 810 is used to fix the motor housing 100 to an external device. The external device can be a watercraft 3000, or the propulsion bracket of a watercraft 3000. It can be understood that the motor 1000 of the implementation of the present application is not limited to the above embodiments, and any structure that simply combines or integrates the motor 1000 and its modules with the implementation of the present application can be used as an embodiment of the present application.

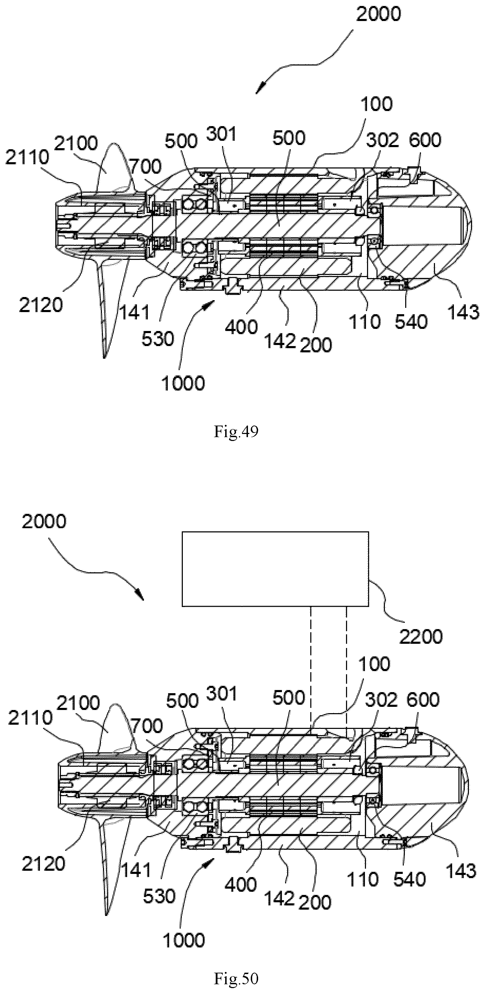

Please refer to Fig. 49, the present application also provides a watercraft propeller 2000, which includes a motor 1000. The watercraft propeller 2000 also includes a propeller 2100, which is connected to the shaft 500. The propeller 2100 is used to receive the rotational torque of the shaft 500. With the propeller 2100 of the watercraft propeller 2000 placed underwater, the motor 1000 outputs rotational torque to the propeller 2100, causing the propeller 2100 to rotate underwater. As a result, the propeller 2100 obtains a reverse thrust from the water flow, thereby providing propulsion to the watercraft propeller 2000 as a whole. It can be understood that the rotor 400 of motor 1000 rotates in the first direction, that is, motor 1000 drives propeller 2100 to rotate in the first direction, and the watercraft propeller 2000 can obtain forward power. When the rotor 400 of motor 1000 rotates in the second direction, that is, motor 1000 drives propeller 2100 to rotate in the second direction, the watercraft propeller 2000 can obtain reverse power, with the second direction opposite to the first direction.

In particular, propeller 2100 has a fixed shaft hole 2110, and one end of the rotor shaft 500 of motor 1000 is fitted with a splined sleeve 2120, which is set on the end of the rotor shaft 500 extending out of the machine housing 100. The splined sleeve 2120 and the shaft 500 extending 100 from the machine housing are matched with the key and keyway to effectively output the rotating torque of the shaft 500 to the splined sleeve 2120. By using the outer peripheral side surface of the splined sleeve 2120 in fixed coordination with the inner surface of the fixed shaft hole 2110, the rotating torque of the shaft 500 is effectively transmitted to the propeller 2100. It can be understood that in other embodiments, the shaft 500 can also transmit the rotating torque of the rotor 400 to the propeller 2100 through coupling devices. In the embodiments of the present application, the propeller 2100 is not limited to the illustrated form, for example, the propeller 2100 can also be in any form such as a folding propeller, a variable pitch propeller, a ducted propeller, a rim-driven propeller, etc.

Please refer to Fig. 50. In this embodiment, the watercraft propeller 2000 also includes a driver 2200, which is electrically connected to the motor 1000 via a conductive cable. The driver 2200 consists of multiple control circuit modules. The driver 2200 is an integrated circuit that can actively work to control the motor 1000 to operate in the set direction, speed, angle, and response time, that is, the driver 2200 inputs current to the winding coil 220, achieving control of the direction, speed, angle, and response time of the motor 1000. The driver 2200 can be integrated with the motor 1000, or can be separated from the motor 1000 and systematized into a multi-module system.

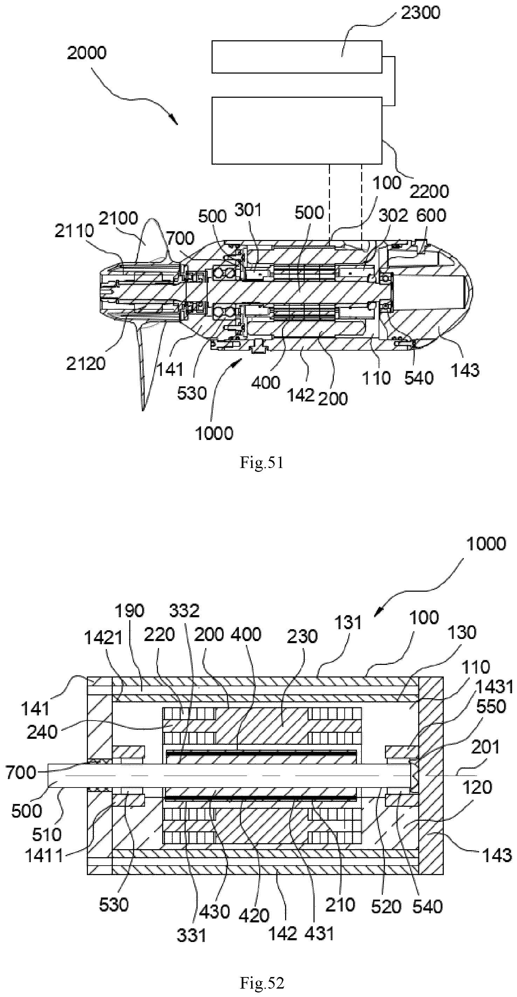

In this embodiment, please refer to Fig. 51. The watercraft propeller 2000 also includes a radiator 2300, which can receive heat from the driver 2200 and/or the housing 100 through fluid pipelines. The cooling fluid can flow through the fluid pipelines, come into contact with the driver 2200 and/or the housing 100, absorb heat from the driver 2200 and/or the housing 100, and then transfer the heat to the radiator 2300. The radiator 2300 is provided with a cooling structure, which is used to contact external cooling medium, so as to achieve overall cooling of the watercraft propeller 2000. Of course, in other embodiments, if the motor 1000 operates underwater, the motor 1000 dissipates heat directly through the water environment, while the radiator 2300 only needs to dissipate heat for the driver 2200.

In other embodiments, please refer to Fig. 52. The watercraft propeller 2000 is generally the same as the embodiments shown in Figs. 50 to 51, except that the motor 1000 of the watercraft propeller 2000 is structurally different from the embodiments shown in Figs. 1 to 48. The difference is that, in this embodiment, the rotor 400 of the motor 100 can drive the insulating liquid 120 to contact the end of the stator 200 in the form of centrifugal or rotational motion, in order to cool the end of the stator 200. In other words, in the motor 1000 applied to the watercraft propeller 2000, the rotor 400 can directly agitate the insulating liquid 120 in the form of centrifugal or rotational motion to contact the end of the stator 200.

In particular, the rotor 400 is at least partially in contact with the insulating liquid 120. When the rotor 400 rotates, it agitate the insulating liquid 120 and throwing off it onto the inner surface of the surrounding stator 200. Due to the rotor 400 being equipped with a rotor bracket 430, the rotor bracket 430 can come into contact with the insulating liquid 120. The surface of the rotor bracket 430 can raise the lower insulating liquid 120, thereby agitating the insulating liquid 120 to throwing off it to the stator 200 surrounding the rotor 400, in order to cool the stator 200. Especially in order to cool the winding coil 220 at the end of the stator 200, the insulating liquid 120 agitated and flung by the rotor 400 should cover at least the winding coil 220 at the end of the stator 200, to ensure the cooling efficiency of the motor 1000.

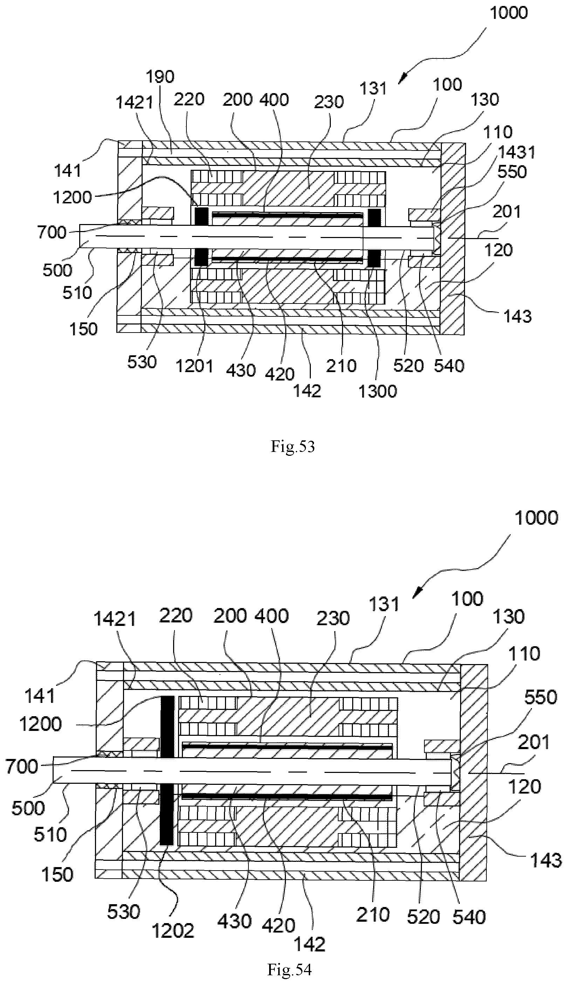

For further details, please refer to Fig. 53. In the embodiment shown in Fig. 52, the motor 1000 includes a second blocking member 1200, which is housed in the cavity 110, located between the rotor 400 and the shaft hole 150. The second blocking member 1200 is used to block the rotor 400 from throwing off the insulating liquid 120 to the shaft hole 150. The structural form of the second blocking member 1200 is generally similar to the structural form of the first blocking member 1100 shown in Fig. 15, and will not be described here. The difference between the second blocking member 1200 and the first blocking member 1100 is that the second blocking member 1200 blocks the insulation liquid 120 thrown off by the rotor 400. In particular, the second blocking member 1200 is fixed on the shaft 500 and is located at one end of the rotor 400 facing the shaft hole 150. There is a gap set between the second blocking member 1200 and the rotor 400, and the second blocking member 1200 can also come into contact with the rotor 400. The second blocking member 1200 can also be integrally set with the rotor 400, for example, the second blocking member 1200 extends from the iron core of the rotor 400. As an implementation, the second blocking member 1200 is provided with a third isolation plate 1201 housed in the inner rotating cavity. The third isolation plate 1201 is located near the end of the stator 200, and the third isolation plate 1201 blocks the insulation liquid 120 splashed from the rotor 400 from flying towards the shaft hole 150. The third isolation plate 1201 deflects the splashed insulation liquid 120 to the inner peripheral surface near the end of the stator 200 close to the shaft hole 150, thereby effectively cooling the end of the stator 200 near the shaft hole 150. It can be understood that, in order to evenly dissipate heat and cool both ends of the stator 200, the motor 1000 also includes a third blocking member 1300. The third blocking member 1300 is located near the other end of the rotor 400 away from the shaft hole 150, housed in the inner rotating cavity, fixed to the shaft 500, and used to block insulation liquid 120 splashed by the rotor 400 from splashing out of the inner rotating cavity. The structure of the third blocking member 1300 is roughly the same as that of the second blocking member 1200, and will not be described here. The second blocking member 1200 and the third blocking member 1300 are respectively set at both ends of the rotor 400, so that the second blocking member 1200 and the third blocking member 1300 can swing open to cool the ends of the stator 200 with insulating liquid 120.

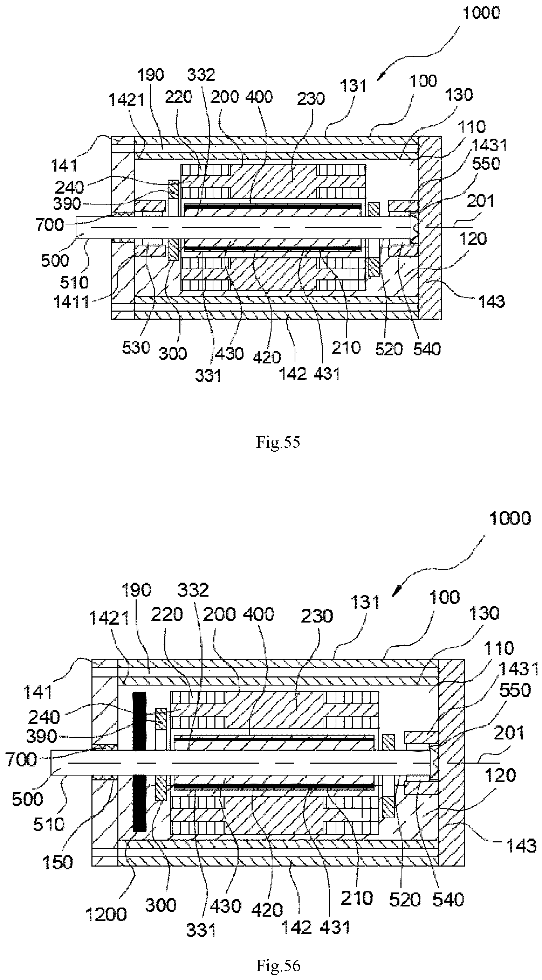

In other embodiments, please refer to Fig. 54, which is roughly the same as the embodiment shown in Fig. 53, except that the second blocking member 1200 is provided with a fourth isolation plate 1202, which is located between the end of the stator 200 and the shaft hole 150. The fourth isolation plate 1202 is fixed on the shaft 500 and can rotate with the shaft 500. The distance from the fourth isolation plate 1202 to the stator 200 near the shaft hole 150 end is less than the distance from the fourth isolation plate 1202 to the end cover, so that the fourth isolation plate 1202 can effectively block the insulation liquid 120 splashing from the inner rotating cavity 210 towards the shaft hole 150. Under the action of rotation, the fourth isolation plate 1202 drives the insulation liquid 120 in contact with it to move centrifugally, and finally slings it to the inner surface of the housing 100 around the fourth isolation plate 1202, achieving uniform contact and heat exchange between the insulation liquid 120 and the housing 100. In other embodiments, as shown in Fig. 55, similar to the embodiment shown in Fig. 52, the motor 1000 further includes an agitation structure 300 different from the embodiments shown in figures 1 to 44. The difference is that the agitation structure 300 is set on the periphery of the rotating shaft 500, and the agitation structure 300 can agitate the insulating liquid 120 centrifugally or rotationally under the action of the rotating shaft 500. In other words, the structure of the agitation structure 300 in this embodiment is the same as that in the illustrated embodiment of the agitation structure 300. It is not repeated here. The difference is that the agitation structure 300 is not limited to being contained in the inner rotating cavity 210, and the rotating structure is not limited to being fixedly connected to the rotating shaft 500. In particular, as shown in Fig. 55, as an implementation, the agitation structure 300 is located on the outer side of the rotating space. The agitation structure 300 is provided with a rotating ring 390, and the rotating ring 390 is sleeved on the periphery of the rotating shaft 500. The inner diameter of the rotating ring 390 is larger than the inner diameter of the rotating shaft 500. When the rotating shaft 500 rotates, the rotating ring 390 rotates around the rotating shaft 500, so that the rotating ring 390 can come into contact with insulating liquid 120. The periphery of the rotating ring 390 can adhere to some insulating liquid 120, and the insulating liquid 120 is thrown off to the surroundings of the rotating shaft 500, so that the insulating liquid 120 contacts and heat exchanges with the components inside the cavity 110, achieving cooling of the components inside the cavity 110. By setting the agitation structure 300 at one or both ends of the rotor 400, the cooling efficiency of the motor 1000 is further increased. Of course, in other embodiments, the rotating ring 390 can also be fixed to the peripheral side of the rotating shaft 500.

It can be understood that the rotating ring 390 can adopt the same structure as the first rotating ring 330 shown in Fig. 25. The difference is that the rotating ring 390 is sleeved on the rotating shaft 500, rather than being fixed to the peripheral side of the rotating shaft 500. Of course, in other embodiments, the rotating ring 390 can also adopt the same structure as the second rotating ring 340 shown in Fig. 30, or adopt the same structure as the third rotating ring 350 shown in Fig. 37. The difference is that the rotating ring 390 is not limited to being accommodated in the inner rotating cavity 1210, nor is it limited to being fixed to the outer peripheral side surface of the rotating shaft 500.

In other embodiments, the combination of the embodiment shown in Fig. 54 and the embodiment shown in Fig. 55, as shown in Fig. 56, a second barrier 1200 is set between the agitation structure 300 near the shaft hole 150 and the shaft hole 150, and the agitation structure 300 near the shaft hole 150 is set outside the inner rotating cavity 210. The second barrier 1200 blocks the insulation liquid 120 splashed by the agitation structure 300 to prevent the insulation liquid 120 from splashing into the shaft hole 150. It should be understood that the first barrier 1100 and the second barrier 1200 in the embodiments of the present application are not limited to the above embodiments. Any similar function to the first barrier 1100 and the second barrier 1200 of the present application, or a simple combination of the two structures, can be used as an embodiment of the present application.

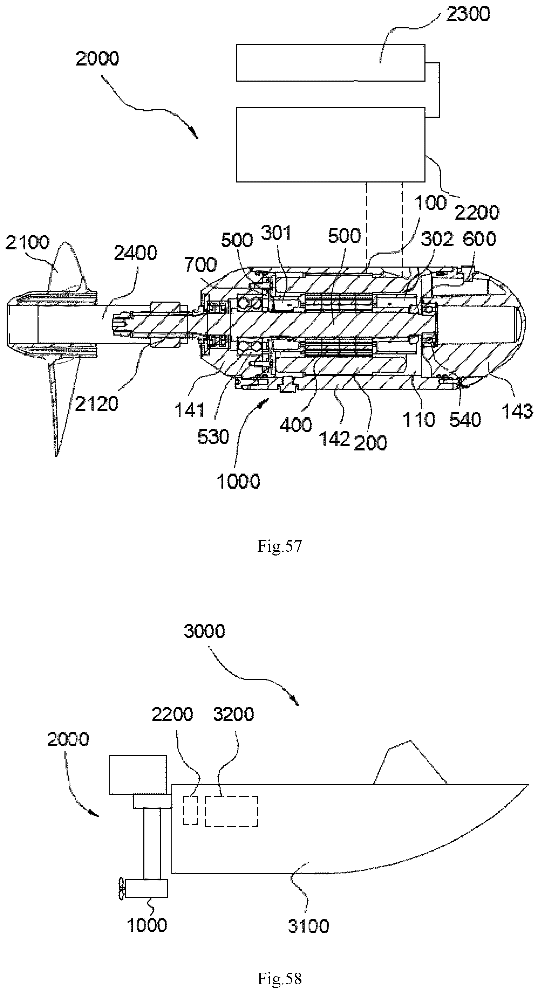

In some embodiments, please refer to Fig. 57, motor 1000 is used to be set underwater, one end of shaft 500 is set outside housing 100, fixed with propeller 2100, insulating liquid 120 can conduct the heat of stator 200 and/or rotor 400 through housing 100 to the water medium outside housing 100. It can be understood that the motor 1000 of watercraft propeller 2000 operates underwater, and the heat of motor 1000 can be dissipated by contacting with the water medium through housing 100, thus achieving the cooling of motor 1000. It can be understood that the watercraft propeller 2000 provided in this application uses a motor 1000 for underwater operation, not limited to the above embodiments, the motor 1000 in each of the above embodiments can be used as a motor 1000 for underwater operation.

In other embodiments, as shown in Fig. 51 based on the embodiment, as shown in Fig. 57, the motor 1000 is used to be set on water, the watercraft propeller 2000 also includes a transmission mechanism 2400, the transmission mechanism 2400 is connected between the propeller 2100 and the shaft 500 to transmit the rotational torque of the shaft 500 to the propeller 2100. The transmission mechanism 2400 can be a gear set, a coupling, or a combination of a gear set and a coupling. Since the motor 1000 operates on water, cooling channels 190 isolated from the cavity 110 can be set between the outer surface 131 of the housing 100 and the inner surface, cooling liquid is introduced into the cooling channels 190, and the insulating liquid 120 can conduct the heat of the stator 200 and/or rotor 400 to the cooling liquid through the housing 100. The cooling liquid can be water, oil, liquid, or other media. Coolant can be introduced into radiator 2300 through pipes, and finally, dissipate heat through radiator 2300 to cool and lower the temperature of motor 1000. It can be understood that the watercraft propeller 2000 provided in this application uses a motor 1000 for water operation, and is not limited to the embodiments mentioned above. The motor 1000 in each of the above embodiments can be used as a water-operated motor 1000.

Furthermore, please refer to Fig. 58. The embodiments provided in this application also include a watercraft 3000, which includes a watercraft propeller 2000 as shown in the embodiment of Fig. 50, a hull 3100, and a power sources 3200. The motor 1000 can be movably installed on the hull 3100, and the power sources 3200 is electrically connected to the stator 200 of the motor 1000.

In particular, the motor 1000 is installed on the stern of the hull 3100, and the motor 1000 and propeller 2100 can operate underwater. The power sources 3200 is fixed inside the hull 3100 and connected to the motor 1000 via a conductive cable. The conductive cable passes through the support tube 800 and extends into the cavity 110. The drive 2200 can be fixed inside or outside the hull 3100. The power sources 3200 is a battery, and it can be charged through an external power sources device. Of course, the vessels 3000 in the embodiments of the present application are not limited to using the watercraft propeller 2000 shown in the drawings. The installation methods of the watercraft propeller 2000 in the above embodiments can all be used as embodiments of the watercraft 3000 provided in the present application.

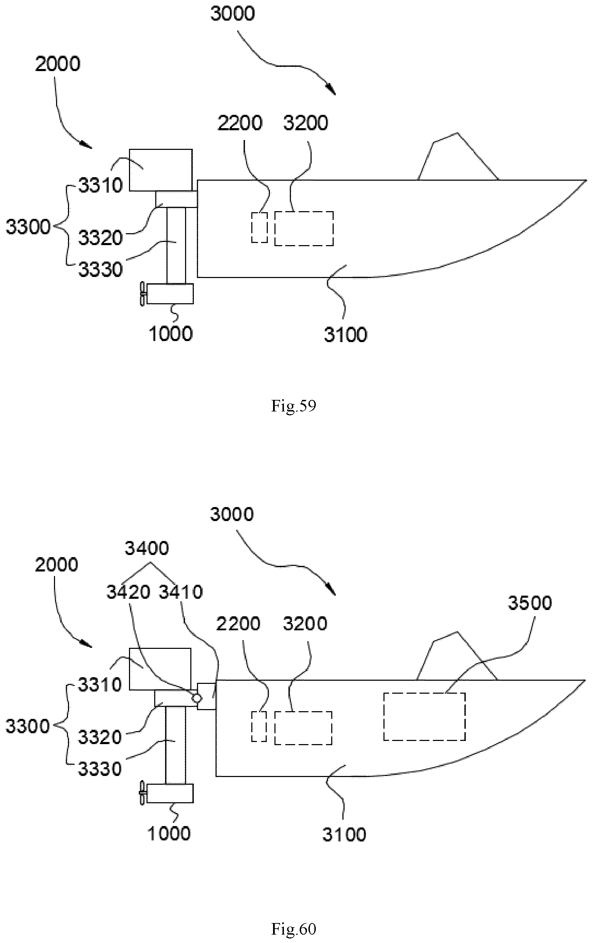

Furthermore, as shown in Fig. 59, the watercraft 3000 also includes a steering mechanism 3300, which is connected to the housing 100 and the hull 3100 to control the direction of propulsion of the propeller 2100. In this embodiment, the steering mechanism 3300 is installed at the rear of the hull 3100 to transfer steering kinetic energy to the watercraft propeller 2000, causing the motor 1000 and propeller 2100 to rotate as a whole, thereby changing the propulsion direction of the propeller 2100, allowing the hull 3100 to change its heading during navigation.

In particular, the steering mechanism 3300 includes a steering control module 3310, a steering bracket 3320, and a steering shaft 3330. The steering control module 3310 is connected to the steering shaft 3330 to control its rotation. The steering bracket 3320 is installed at the rear of the hull 3100. The steering shaft 3330 is set in the steering bracket 3320, with flanges and support pipes 800 fixed to the steering shaft 3330, rotating with it. The steering control module 3310 is equipped with a steering motor and steering transmission structure. The steering motor receives steering control signals and outputs steering torque to the steering transmission structure. The steering transmission structure transmits the rotating torque to the steering shaft 3330, thereby steering the motor 1000 and propeller 2100. It is understood that the steering mechanism 3300 of the present application is not limited to the above embodiments. Any steering mechanism 3300 aimed at changing the thrust direction of the propeller 2100 can be used as an embodiment of the present application, for example, the steering mechanism 3300 has a steering control module 3310 that sets a hydraulic drive structure and a steering transmission structure. Power is output to the steering transmission structure through manual control of the hydraulic drive structure, and the steering transmission structure 3318 transmits the hydraulic drive force to the steering shaft 3330, thereby controlling the direction of the propeller 2100.

Furthermore, please refer to Fig. 60, the watercraft 3000 also includes a trimming mechanism 3400, which is connected to the motor 1000 and the hull 3100, and used to control the trimming of the propeller 2100. In this embodiment, the trimming mechanism 3400 is installed at the stern of the hull 3100 and connected to the steering bracket 3320 to transfer the trimming kinetic energy to the steering bracket 3320, causing the steering bracket 3320 and the watercraft propeller 2000 to lift as a whole, allowing the motor 1000 and propeller 2100 to submerge in water or rise above the water surface. It can be understood that when the watercraft 3000 is in sailing mode, the trimming mechanism 3400 controls the steering bracket 3320 to rotate downward relative to the hull 3100, causing the motor 1000 and propeller 2100 to submerge underwater. When the watercraft 3000 is in a berthed state, the trimming mechanism 3400 controls the steering bracket 3320 to rotate upward relative to the hull 3100, causing the motor 1000 and propeller 2100 to rise above the water surface, thereby avoiding long-term damage to the motor 1000 and propeller 2100 in water.

In particular, the trimming mechanism 3400 includes a trim control module 3410 and a trim shaft 3420. The trim control module 3410 controls the rotation of the trim shaft 3420. The trim shaft 3420 is set on the hull 3100. The steering bracket 3320 is connected to the trim shaft 3420 and can rotate relative to the hull 3100 with the trim shaft 3420. The trim control module 3410 is equipped with a trimming motor and a trimming transmission structure. The trimming motor receives the trimming control signal and outputs the trimming rotational torque to the trimming transmission structure. The trimming transmission structure transmits the trimming rotational torque to the trim shaft 3420, thereby causing the steering mechanism 3300, motor 1000, and propeller 2100 to tilt as a whole. It can be understood that the trimming mechanism 3400 of the present application is not limited to the above embodiments. Any trimming mechanism 3400 aimed at trimming the motor 1000 and propeller 2100 relative to the hull 3100 can be used as an embodiment of the present application. For example, the trimming mechanism 3400 has a manual drive structure at the trim control module 3410, which outputs trimming force to the trim shaft 3420 through the manual drive structure, so that the steering bracket 3320, motor 1000, and propeller 2100 can be lifted relative to the hull 3100 under the action of manual driving force.

Furthermore, as shown in Fig. 60, the watercraft 3000 also includes an interaction system 3500, which is set on the hull 3100 to receive commands and control the operation of the motor 1000. In this embodiment, the interactive system 3500 can be installed at the bow of the hull 3100. The interactive system 3500 is connected to the trimming mechanism 3400 and the steering mechanism 3300 to output steering, trimming, and motor 1000 operation signals to the steering mechanism 3300, trimming mechanism 3400, and motor 1000. The interactive system 3500 is also used to receive user control commands and control the operation of the steering mechanism 3300, trimming mechanism 3400, and motor 1000 according to the control commands.

In particular, the interactive system 3500 includes a steering wheel, buttons, and a gear device. The steering wheel is set on the hull 3100 to receive user steering control signals and convert them into steering electrical signals. The steering electrical signals are transmitted via conductive cables to the steering motor of the steering mechanism 3300, thereby controlling the steering of the hull 3100. The joystick is installed on the bow of the watercraft 3100, can be located on one side of the steering wheel, and is used to receive the user's joystick command to control the operation of the joystick structure, causing the motor 1000 and propeller 2100 to lift, or to control the motor 1000 and propeller 2100 to submerge underwater. The gear device is installed on the watercraft 3100 and is connected to the driver 2200 through a conductive wire. It is used to receive user's forward and reverse control commands and transmit the forward and reverse control commands to the driver 2200 to control the operation of the motor 1000. The interactive system 3500 also includes a display screen and terminal. The terminal is connected to the steering mechanism 3300, trimming mechanism 3400, and driver 2200, and is used to receive a user's touch commands and transmit the user's touch commands to the terminal to control the operation of the steering mechanism 3300, trimming mechanism 3400, and watercraft propeller 2000. The terminal can also receive operational information from the steering mechanism 3300, trimming mechanism 3400, and watercraft propeller 2000 through various sensors, and convert the operational information of the steering mechanism 3300, trimming mechanism 3400, and motor 1000 into displayable information on the screen 3540, allowing the user to obtain the operational status of the steering mechanism 3300, trimming mechanism 3400, and watercraft propeller 2000. It is understood that the interactive system 3500 of the present application is not limited to the above embodiments. Any interactive system 3500 aimed at enabling users to control and interact with the steering mechanism 3300, trimming mechanism 3400, and watercraft propeller 2000 can be used as an embodiment of the present application. For example, the interactive system 3500 can also be equipped with a manual pure mechanical steering wheel to control the operation of steering mechanism 3300 using pure mechanical torque.

It can be understood that the watercraft 3000 in the embodiment of the present application is not limited to the above embodiments, any similar embodiments as the above embodiments, or improvements combined with the above embodiments, can be used as embodiments of the present application.

A detailed description of the embodiments of the present application has been provided above. Specific examples have been used in this article to explain the principles and implementation methods of the present application. The explanation of the above embodiments is only intended to help understand the methods and core ideas of the present application. At the same time, for general technical personnel in this field, based on the ideas of the present application, there will be changes in specific implementation methods and application scope. Therefore, the content of this specification should not be understood as limiting the present application.

## Claims

1. A motor, the motor comprising:
a housing, provided with a cavity filled with insulating liquid;
a stator, fixed inside the cavity, and provided with an inner rotating cavity;
an agitation structure, rotatably provided in the inner rotating cavity, at least partially immersed in the insulating liquid, and configured to agitate the insulating liquid in a centrifugal or rotational for to contact and cool the stator.

2. The motor of claim 1, wherein an end of the stator is provided with a winding coil, the winding coil generates a magnetic field when energized, and the agitation structure agitate the insulating liquid to ensure that it at least contacts the winding coil.

3. The motor of claim 2, further comprising: a rotor, rotatably arranged in the inner rotating cavity and electromagnetically coupled with the stator, wherein the agitation structure rotates synchronously with the rotor.

4. The motor of claim 3, the motor comprising: a shaft, wherein one end of the shaft is disposed in the cavity, and the rotor is fixed on the periphery of the shaft.

5. The motor of claim 4, wherein the housing is provided with a shaft hole, one end of the shaft extends out of the housing through the shaft hole, and the end of the shaft extending out of the housing is configured to output rotational torque.

6. The motor of claim 5, further comprising: a first blocking member fixed on the shaft and located between the agitation structure and the shaft hole, to prevent the agitation structure from throwing off the insulating liquid towards the shaft hole.

7. The motor of claim 6, the first blocking member is provided with a first isolation plate, the first isolation plate accommodated in the inner rotating cavity, the first isolation plate be provided with a cylindrical surface arranged around the circumference of the shaft, the cylindrical surface in clearance fit with the inner peripheral surface of the inner rotating cavity, and the diameter of the cylindrical surface larger than the outer diameter of the agitation structure.

8. The motor of claim 7, the first isolation plate integrally formed with the agitation structure, or spaced from the agitation structure.

9. The motor of claim 7, the first blocking member comprises a second isolation plate, the second isolation plate located outside the inner rotating cavity, and the second isolation plate covering the opening of the rotating cavity facing the shaft hole.

10. The motor of claim 5, further comprising: a sealing member fixed to the housing and sealing the gap between the outer peripheral side surface of the shaft and the inner surface of the shaft hole.

11. The motor of claim 10, the sealing member is provided with a first sealing lip edge facing the shaft hole and a second sealing lip edge facing the cavity side, the first sealing lip edge used for preventing the medium outside the housing from entering the cavity, and the second sealing lip edge used for preventing the insulating liquid from flowing out of the cavity.

12. The motor of claim 3, wherein the rotor is at least partially immersed in the insulating liquid.

13. The motor of claim 12, the rotor is provided with a magnetic components in contact with the insulating liquid to cool the magnetic components.

14. The motor of claim 3, the agitation structure integrally arranged with or spaced from the rotor.

15. The motor of claim 14, the rotor comprises a rotor bracket and a magnetic member fixed to the rotor bracket, the part of the rotor bracket forming the agitation structure.

16. The motor of claim 14, the rotational axis of the agitation structure coaxially arranged with the rotational axis of the rotor, and the agitation structure spaced from the end of the rotor.

17. The motor of claim 16, wherein the agitation structure comprises a first rotating ring, the first rotating ring is provided with a first outer peripheral surface, and the first outer peripheral surface is provided with a preset surface roughness to allow a portion of the insulating liquid to adhere to the first outer peripheral surface.

18. The motor of claim 17, the first outer peripheral surface be provided with multiple dimples and/or multiple convexities.

19. The motor of claim 18, the multiple dimples and/or multiple convexities arranged in an array.

20. The motor of claim 17, wherein the cavity is partially filled with the insulating liquid, with a portion of the first outer peripheral surface immersed in the insulating liquid, to adhere the portion of the insulating liquid, separate it from a low-position insulating liquid, and direct it to a high-position stator.

21. The motor of claim 17, wherein the cavity is fully filled with the insulating liquid, and the first outer peripheral surface drives the insulating liquid within the inner rotating cavity to rotate.

22. The motor of claim 17, when the rated speed of the rotor between 500rpm and 1500rpm, the ratio of the weight of the insulating liquid thrown off per unit time on the first outer peripheral surface to the total weight of the insulating liquid less than or equal to 30%.

23. The motor of claim 17, the preset surface roughness proportional to the weight of the insulating liquid adhered to the unit area of the first outer peripheral surface.

24. The motor of claim 17, the preset surface roughness inversely correlates with the rated speed of the rotor.

25. The motor of claim 17, the preset surface roughness inversely correlates with the outer diameter of the first rotating ring.

26. The motor of claim 16, wherein the agitation structure comprises a second rotating ring, with a protrusion provided on a peripheral side of the second rotating ring, and with one side of the protrusion configured to agitate the insulating liquid.

27. The motor of claim 26, the second rotating ring be provided with multiple protrusions, the multiple protrusions evenly spaced around the circumference of the second rotating ring.

28. The motor of claim 26, the angle formed between two adjacent protrusions and the axis of the second rotating ring ranges from 30° to 120°.

29. The motor of claim 26, the protrusion extend from one end of the second rotating ring to the other end of the second rotating ring.

30. The motor of claim 26, the direction from the bottom to the top of the protrusion forms a predetermined angle with the direction from the rotational axis of the second rotating ring to the bottom of the protrusion.

31. The motor of claim 30, the predetermined angle less than or equal to 60°.

32. The motor of claim 16, wherein the agitation structure comprises a third rotating ring, with a peripheral side of the third rotating ring provided with an inner cavity and a hole communicating with the inner cavity;
wherein an opening of the hole, positioned away from the inner cavity, is located on an outer peripheral surface of the third rotating ring; and
wherein an inner surface of the inner cavity and an inner surface of the hole are configured to agitate the insulating liquid.

33. The motor of claim 32, wherein the third rotating ring is provided with multiple inner cavities and multiple holes, the multiple inner cavities are spaced along a circumference of the third rotating ring, and each inner cavity communicates with at least one of the multiple holes.

34. The motor of claim 33, the two adjacent inner cavities separated by a partition plate in between them, and the partition plate extends radially along the third rotating ring.

35. The motor of claim 34, the cavity be provided with an inner curved surface away from the axis of the third rotating ring, the inner curved surface parallel to the outer peripheral surface of the third rotating ring, and the distance from the inner curved surface to the outer peripheral surface of the third rotating ring larger than the thickness of the partition plate.

36. The motor of claim 33, the third rotating ring be provided with multiple rows of holes, each row of holes arranged parallel to the axis of the third rotating ring.

37. The motor of claim 32, the hole near the inner surface of the inner cavity.

38. The motor of claim 32, the hole extend radially along the third rotating ring.

39. The motor of claim 32, the diameter of the hole proportional to the volume of the inner cavity.

40. The motor of claim 32, wherein an end of the third rotating ring is provided with an opening communicating with the cavity, and the opening is configured to introduce the insulating liquid into the inner cavity.

41. The motor of any one of claims 16 to 40, wherein a peripheral side of the agitation structure opposite the end of the stator agitate the insulating liquid for cooling the end of the stator.

42. The motor of any one of claims 16 to 40, wherein the agitation structure agitate a first weight of insulating liquid when rotating in a first direction, agitate a second weight of insulating liquid when rotating in a second direction, with the first direction being opposite the second direction, and the first weight being greater than the second weight.

43. The motor of claim 42, the rotor be provided with a first operating frequency when rotating in the first direction and a second operating frequency when rotating in the second direction, the first operating frequency larger than the second operating frequency.

44. The motor of any one of claims 16 to 40, the agitation structure be provided with a balance plate adjacent to the rotor, the balance plate limiting the end of the rotor.

45. The motor of any one of claims 16 to 40,the rotor be provided with a weight reduction hole, the agitation structure be provided with a drainage hole in communication with the weight reduction hole, the drainage hole used to guide the insulating liquid into the weight reduction hole.

46. The motor of any one of claims 1 to 40, the weight of the insulating liquid inversely proportional to the operating frequency of the agitation structure.

47. The motor of any one of claims 1 to 40, the volume of the insulating liquid accounts for 30% to 50% of the volume of the cavity.

48. The motor of claims 1 to 40, wherein a portion of the housing outside the cavity is configured to contact heat dissipation medium, transferring heat of the insulating liquid to the heat dissipation medium.

49. A watercraft propeller, the watercraft propeller comprises a motor of any one of claims 1 to 48.

50. A watercraft propeller, comprising a motor and a propeller, wherein the motor comprises:
a housing, provided with a cavity containing insulating liquid;
a stator, fixed in the cavity and provided with an inner rotating cavity;
a rotor, rotatably disposed in the inner rotating cavity, electromagnetically coupled with the stator, and configured to drive the insulating liquid to contact an end of the stator in a form of centrifugal or rotational motion to cool the end of the stator; and
a shaft, with one end disposed in the cavity and fixed to the rotor, and the other end configured to output rotational torque,
wherein the propeller is connected to the shaft to receive rotational torque from the shaft.

51. The watercraft propeller of claim 50, wherein the housing is provided with a shaft hole, the shaft passes through the shaft hole and connects to the propeller, and the motor comprises a second blocking member, accommodated in the cavity and located between the rotor and the shaft hole, with the second blocking member configured to block the rotor from throwing off the insulating liquid to the shaft hole.

52. The watercraft propeller of claim 50, the motor further comprises an agitation structure, the agitation structure provided on the periphery of the shaft, the agitation structure confgured to stir the insulating liquid to perform a centrifugal or rotational motion under the rotating action of the shaft.

53. The watercraft propeller of claim 52, the agitation structure is fixed to the peripheral side of the shaft.

54. The watercraft propeller of claims 52 or 53, the agitation structure be provided with a rotating ring positioned on the peripheral side of the shaft, the outer side of the rotating ring confgured to stir the insulating liquid to perform centrifugal or rotational motion.

55. The watercraft propeller of claim 54, the peripheral side surface of the rotating ring be provided with multiple convexities and/or multiple dimples, the multiple convexities and/or multiple dimples confgured to stir the insulating liquid.

56. The watercraft propeller of claim 54, the peripheral side of the rotating ring be provided with at least one protrusion, at least one the protrusions confgured to stir the insulating liquid.

57. The watercraft propeller of claim 54, the peripheral side of the rotating ring be provided with at least one inner cavity and at least one hole, the hole communicates with the inner cavity, the opening of the hole away from the inner cavity located on the outer peripheral side of the rotating ring, and the inner surface of the hole and the inner cavity used for stirring the insulating liquid.

58. The watercraft propeller of any one of claims 50 to 53, wherein the motor is configured to be arranged underwater, with one end of the shaft arranged outside the housing and fixed to the propeller, and the insulating liquid configured to conduct heat of the stator or the rotor to water medium outside the housing.

59. The watercraft propeller of any one of claims 50 to 53, wherein the motor is configured to be arranged above water, and the watercraft propeller further comprises a transmission mechanism connected between the propeller and the shaft to transmit the rotational torque of the shaft to the propeller.

60. The watercraft propeller of claim 59, the housing be provided with a cooling channel isolated from the cavity, the cooling channel used for introducing cooling liquid, and the insulating liquid confgured to conduction the heat of the stator and/or rotor to the cooling liquid through the housing.

61. A watercraft, the watercraft comprises the watercraft propeller of any one of claims 50 to 60.

62. The watercraft of claim 61, the watercraft comprises a hull and a power source, the housing can movably arranged on the hull, and the power source electrically connected to the stator of the motor.

63. The watercraft of claim 61, the watercraft further comprises a steering mechanism connected to the hull and used for controlling the the direction of propulsion of the propeller.

64. The watercraft of claim 61, the watercraft further comprises a trimming mechanism connected to the motor and used for controlling the trimming of the propeller.

65. The watercraft of claim 61, the watercraft comprises an interaction system, the interaction system arranged on the hull of the watercraft for receiving instructions and controlling the operation of the motor.
